# EUROPÄISCHE PATENTANMELDUNG

(11) **EP 4 599 984 A2**
(43) Veröffentlichungstag der Anmeldung: **13.08.2025**
(21) Anmeldenummer: 25155987.8
(22) Anmeldetag: 05.02.2025
(51) Int. Cl.: B24B 55/10, B24B 23/03

(54) **STAUBABFUHRVORRICHTUNG FÜR EINE SCHLEIFMASCHINE**

(30) Priorität: 09.02.2024 DE 102024103665; 21.05.2024 DE 102024114134
(71) Anmelder: Festool GmbH, 73240 Wendlingen am Neckar (DE)
(72) Erfinder: Schüssler, Erik, 73240 Wendlingen (DE); Tulodziecki, Stefan, 73240 Wendlingen (DE); Lyubovitsky, Michail, 73240 Wendlingen (DE)
(74) Vertreter: Patentanwälte Bregenzer und Reule Partnerschaftsgesellschaft mbB

(57) **Zusammenfassung**

Die Erfindung betrifft eine Staubabfuhrvorrichtung (50), insbesondere Staubsammelvorrichtung (70), für eine Hand-Werkzeugmaschine, insbesondere eine Schleifmaschine (11) oder eine Säge, wobei die Staubabfuhrvorrichtung (50) einen rohrförmigen Anschlusskörper (51A, 51B) zum Anschließen an einen rohrförmigen Staubabfuhranschluss (33) der Hand-Werkzeugmaschine (10) aufweist, wobei über den Staubabfuhranschluss (33) ein Staubluftstrom zur Wegförderung von beim Betrieb der Schleifmaschine (11) anfallendem Staub aus einem Staubabfuhrraum (31) zu der Staubabfuhrvorrichtung (50) strömen kann, wobei der Anschlusskörper (51A, 51B) eine Klemmeinrichtung (52) zum Verklemmen mit dem Staubabfuhranschluss (33) aufweist, wobei die Klemmeinrichtung (52) ein Betätigungselement (57X) zur Betätigung der Klemmeinrichtung (52) zwischen einer Freigabestellung (FS) und einer Klemmstellung aufweist, wobei ein Aufnahmequerschnitt (55) des Anschlusskörpers (51A, 51B) für den Staubabfuhranschluss (33) in der Klemmstellung zum Verklemmen des Staubabfuhranschlusses (33) mit dem Anschlusskörper (51A, 51B) kleiner als in der Freigabestellung (FS) ist, die zum Entfernen der Staubabfuhrvorrichtung (50) von dem Staubabfuhranschluss (33) vorgesehen ist. Das Betätigungselement (57X) umfasst einen Schwenkhebel (57), der zwischen einer der Klemmstellung zugeordneten Klemm-Betätigungsstellung (KB) und einer der Freigabestellung (FS) zugeordneten Freigabe-Betätigungsstellung (FB) um eine Schwenkachse (SA) um einen Schwenkwinkel schwenkbar gelagert ist.

## Beschreibung

Die Erfindung betrifft eine Staubabfuhrvorrichtung, insbesondere eine Staubsammelvorrichtung, für eine Hand-Werkzeugmaschine, insbesondere eine Schleifmaschine oder eine Säge, wobei die Staubabfuhrvorrichtung einen rohrförmigen Anschlusskörper zum Anschließen an einen rohrförmigen Staubabfuhranschluss der Hand-Werkzeugmaschine aufweist, wobei über den Staubabfuhranschluss ein Staubluftstrom zur Wegförderung von beim Betrieb der Schleifmaschine anfallendem Staub aus einem Staubabfuhrraum zu der Staubabfuhrvorrichtung strömen kann, wobei der Anschlusskörper eine Klemmeinrichtung zum Verklemmen mit dem Staubabfuhranschluss aufweist, wobei die Klemmeinrichtung ein Betätigungselement zur Betätigung der Klemmeinrichtung zwischen einer Freigabestellung und einer Klemmstellung aufweist, wobei ein Aufnahmequerschnitt des Anschlusskörpers für den Staubabfuhranschluss in der Klemmstellung zum Verklemmen des Staubabfuhranschlusses mit dem Anschlusskörper kleiner als in der Freigabestellung ist, die zum Entfernen der Staubabfuhrvorrichtung von dem Staubabfuhranschluss vorgesehen ist.

Die Staubabfuhrrichtung ist beispielsweise als eine Staubsammeleinrichtung mit einem Staubbehälter ausgestaltet. Die Staubabfuhrrichtung kann aber auch einen Saugschlauch oder ein Teil eines Saugschlauches bilden. Es ist an sich bekannt, dass eine Staubsammeleinrichtung anhand einer Klemmschelle an einem Auslass-Stutzen einer Schleifmaschine befestigbar ist. Die Klemmschelle wird mittels einer Schraube in ihre Klemmstellung betätigt, was jedoch umständlich ist. Der Bediener braucht beispielsweise einen Schraubendreher, um eine Schraube anzutreiben, die die Klemmeinrichtung betätigt. Eine derartige Betätigung ist beispielsweise dann akzeptabel, wenn der Staubsammelbehälter oder die Staubsammelvorrichtung dauerhaft an der Hand-Werkzeugmaschine, beispielsweise Schleifmaschine bleibt. Dies ist beispielsweise dann kein Problem, wenn der Staubsammelbehälter eine Öffnung zum Entleeren aufweist, beispielsweise mit einem Deckel oder dergleichen, oder der Staubsammelbehälter vom Anschlusskörper trennbar ist, um ihn zu entleeren.

Es ist die Aufgabe der vorliegenden Erfindung, eine verbesserte Staubabfuhrvorrichtung bereit zu stellen.

Zur Lösung der Aufgabe ist bei einer Staubabfuhrvorrichtung der eingangs genannten Art vorgesehen, dass das Betätigungselement einen Schwenkhebel umfasst, der zwischen einer der Klemmstellung zugeordneten Klemm-Betätigungsstellung und einer der Freigabestellung zugeordneten Freigabe-Betätigungsstellung um eine Schwenkachse um einen Schwenkwinkel schwenkbar gelagert ist.

Es ist ein Grundgedanke dabei, dass die Betätigung der Klemmeinrichtung deutlich erleichtert ist. Der Schwenkhebel kann über einen kleinen Schwenkweg oder Schwenkwinkel zwischen der Klemm-Betätigungsstellung und der Freigabe-Betätigungsstellung betätigt werden, was bequem und einfach realisierbar ist.

Im an der Hand-Werkzeugmaschine montierten Zustand der Staubabfuhrvorrichtung ist der Staubabfuhranschluss, insbesondere ein Rohrkörper des Staubabfuhranschlusses, in dem Aufnahmequerschnitt des Anschlusskörpers aufgenommen oder greift in den Aufnahmequerschnitt ein. Der Aufnahmequerschnitt ist beispielsweise durch einen Innenraum und/oder eine Innenumfangswand und/oder Innenumfangswandfläche des insbesondere rohrförmigen Anschlusskörpers definiert und/oder begrenzt.

Der Aufnahmequerschnitt ist zur Aufnahme des Anschlusskörpers vorgesehen und/oder ausgestaltet.

Der Aufnahmequerschnitt und/oder der innere Querschnitt und/oder die Innenumfangswand des Anschlusskörpers ist insbesondere kreisrund, elliptisch oder polygonal.

Vorteilhaft ist vorgesehen, dass der Staubabfuhranschluss und/oder der Anschlusskörper rohrförmig ist oder ein Anschlussrohr oder einen Anschlussstutzen umfasst oder durch ein Anschlussrohr oder einen Anschlussstutzen gebildet ist.

Der Anschlusskörper weist vorzugsweise einen Schlitz auf, der in der Klemmstellung enger als in der Freigabestellung ist. Der Schlitz ist beispielsweise in der Freigabestellung oder Freigabe-Bestätigungsstellung breiter als in der Klemm-Bestätigungsstellung oder der Klemmstellung.

Der Schwenkwinkel ist vorzugsweise kleiner als 300 Grad, weiter bevorzugt kleiner als 250 Grad. Noch kleinere Schwenkwinkel sind ohne weiteres möglich, beispielsweise Schwenkwinkel, die kleiner als 180 Grad, weitere bevorzugt kleiner als 150 Grad und noch weiter bevorzugt kleiner als 120 Grad sind. An dieser Stelle sei erwähnt, dass der Schwenkhebel bereits nach Durchlaufen des Schwenkwinkels aus der Klemm-Betätigungsstellung in die Freigabe-Betätigungsstellung verstellt ist und über die Freigabe-Betätigungsstellung hinaus noch weiter verschwenkbar sein kann, was aber den Aufnahmequerschnitt des Anschlusskörpers nicht unbedingt erweitern muss. Mithin ist also die Freigabestellung bereits nach Durchlaufen des Schwenkwinkels erreicht und die Staubabfuhrvorrichtung kann von dem Staubabfuhranschluss entfernt werden.

Bevorzugt ist es, wenn die Staubabfuhrvorrichtung eine Federeinrichtung, beispielweise einen insbesondere blockartigen elastischen Körper und/oder eine Schraubenfeder oder dergleichen, aufweist, die die Klemmeinrichtung in Richtung der Freigabestellung belastet. Der elastische Körper und die Schraubenfeder können beispielsweise hintereinander angeordnet sein und/oder funktional in Reihe geschaltet sein. Somit wirkt also der Schwenkhebel in Richtung der Klemmstellung, wohingegen in Richtung der Freigabestellung, bei der der Aufnahmequerschnitt des Anschlusskörpers erweitert ist, die Federeinrichtung wirkt. Die Federeinrichtung ermöglicht somit ein leichteres Lösen der Staubabfuhrvorrichtung von dem Staubabfuhranschluss.

Die Klemmeinrichtung umfasst vorzugsweise eine Klemmschelle oder ist in der Art einer Klemmschelle ausgebildet. Die Klemmeinrichtung umfasst vorzugsweise in der Klemmstellung aufeinander zu verstellte und in der Freigabestellung voneinander weg verstellte Klemmschenkel. Die Klemmschenkel sind aufeinander zu und voneinander weg verstellbar. Die Klemmschelle oder die Klemmschenkel können von dem Anschlusskörper separate Komponenten bilden. Mithin kann beispielsweise der Anschlusskörper von der Klemmschelle und/oder von den Klemmschenkeln umgeben sein. Es ist aber auch möglich, dass der Anschlusskörper die Klemmschelle oder mindestens einen Klemmschenkel oder die Klemmschenkel integral umfasst. Beispielsweise kann der Anschlusskörper im Bereich der Klemmeinrichtung einen Schlitz aufweisen, so dass dadurch Klemmschenkel gebildet sind.

Freie Endbereiche der Klemmschenkel sind vorteilhaft einander zugewandt oder liegen einander gegenüber. Zwischen den freien Endbereichen der Klemmschenkel ist vorzugsweise ein Spalt oder Schlitz vorhanden, der in der Klemmstellung enger als in der Freigabestellung ist. Der Schlitz oder Spalt kann in der Klemmstellung auch nicht mehr vorhanden sein, d. h. die Endbereiche der Klemmschenkel können in der Klemmstellung aneinander anliegen. Durch Betätigung des Betätigungselements ist eine Breite des Schlitzes veränderbar oder verstellbar.

Die Klemmschenkel sind vorzugsweise einstückig mit einem insbesondere durch den Anschlusskörper gebildeten Grundkörper, an dem die Klemmschenkel ausgebildet sind. Dieser Grundkörper oder Anschlusskörper weist vorzugsweise eine derartige federnde Eigenschaft oder Elastizität auf, dass die Klemmschenkel voneinander weg federbelastet sind. Beispielsweise ist der Grundkörper oder Anschlusskörper rohrförmig und weist einen Schlitz auf, der zwischen den Klemmschenkeln verläuft und/oder anhand dessen die Klemmschenkel ausgebildet sind.

Die Federeinrichtung ist vorzugsweise zwischen den Klemmschenkeln angeordnet und belastet die Klemmschenkel voneinander weg. Beispielsweise kann die Federeinrichtung einen Federkörper, beispielsweise einen insbesondere blockartigen elastischen Körper und/oder eine Schraubenfeder oder dergleichen, umfassen, der zwischen den Klemmschenkeln angeordnet ist. Der Federkörper kann beispielsweise an dem nachfolgend erläuterten Zuganker angeordnet sein oder von dem Zuganker durchsetzt sein. Der Federkörper ist beispielsweise zwischen den freien Endbereichen der Klemmschenkel angeordnet oder den freien Endbereichen der Klemmschenkel zugeordnet und/oder an diesen freien Endbereichen angeordnet, insbesondere befestigt.

Der Schwenkhebel ist vorzugsweise mit einem Zuganker bewegungsgekoppelt oder verbunden, wobei der Schwenkhebel den Zuganker in der Klemm-Betätigungsstellung im Sinne eines Verengens des Aufnahmequerschnitts betätigt, und/oder der Zuganker Klemmschenkel der Klemmeinrichtung in der Klemm-Betätigungsstellung aufeinander zu betätigt.

Der Zuganker ist beispielsweise an freien Endbereichen der Klemmschenkel mit den Klemmschenkeln verbunden. Beispielsweise durchsetzt der Zuganker die Klemmschenkel an ihren freien Endbereichen. Zwischen den freien Endbereichen der Klemmschenkel ist beispielsweise ein Abstand, z.B. ein Schlitz oder eine Nut, vorgesehen, über die sich der Zuganker hinweg erstreckt.

Beispielsweise kann der Zuganker mit einem der Klemmschenkel verbunden sein, so dass er diesen auf Zug und vorteilhaft auch auf Schub betätigen kann. Ein von diesem Klemmschenkel abstehender Bereich des Zugankers ist beispielsweise mit dem Schwenkhebel bewegungsverbunden oder bewegungsgekoppelt. Wenn der Schwenkhebel dann eine Zugbetätigung auf den Zuganker ausübt, wirkt der Schwenkhebel vorzugsweise auf den einen Klemmschenkel, während der Zuganker auf den anderen Klemmschenkel wirkt um auf diesem Wege die Klemmschenkel aufeinander zu zu bewegen. Selbstverständlich kann der Zuganker auch ein Schubelement bilden, d.h. dass der Zuganker nicht nur in Richtung der Klemmstellung auf einen oder beide Klemmschenkel wirkt, sondern auch in Richtung der Freigabestellung.

Der Schwenkhebel umfasst vorzugsweise eine Betätigungskontur zum Betätigen der Klemmeinrichtung zwischen der Freigabestellung und der Klemmstellung. Beispielsweise kann die Betätigungskontur exzentrisch zu der Schwenkachse verlaufen oder eine Exzenter-Kontur umfassen.

Der Schwenkhebel weist vorzugsweise eine dem Anschlusskörper zugewandte Aufnahmekontur für den Anschlusskörper auf, in die der Anschlusskörper in der Klemm-Betätigungsstellung eingreift. Beispielsweise ist die Aufnahmekontur gerundet oder in der Art einer Mulde ausgestaltet, wobei der rohrförmige Anschlusskörper mit seiner Außenumfangskontur in die Mulde oder in die gerundete Aufnahmekontur eingreifen kann. Somit liegt der Schwenkhebel in der Klemm-Betätigungsstellung möglichst nahe an dem Anschlusskörper an und steht nicht von dem Anschlusskörper ab.

Der Schwenkhebel weist vorzugsweise einen Griffvorsprung auf, der in der Klemm-Betätigungsstellung von dem Anschlusskörper zum Ergreifen durch einen Bediener und Betätigen aus der Klemm-Betätigungsstellung in die Freigabe-Betätigungsstellung absteht. Beispielsweise kann der Griffvorsprung gegensinnig zur Aufnahmekontur an dem Schwenkhebel verlaufen oder ausgerichtet sein.

Vorteilhaft weist die Staubabfuhrvorrichtung einen an dem Anschlusskörper angeordneten und mit dem Anschlusskörper strömungsverbundenen Saugschlauch zur Verbindung mit einem Staubsauger auf. Der Saugschlauch ist beispielsweise an dem rohrförmigen Anschlusskörper fest oder drehbar bezüglich einer Längsachse des Rohrkörpers angeordnet. Der Anschlusskörper selbst kann also beispielsweise drehfest an dem Staubabfuhranschluss der Hand-Werkzeugmaschine montierbar sein, wohingegen der Saugschlauch sich relativ zum Anschlusskörper anhand des Drehlagers drehen kann.

Vorteilhaft ist vorgesehen, dass die Staubabfuhrvorrichtung einen Staubsammelbehälter zum Sammeln von Staub umfasst. Ein Aufnahmeraum des Staubsammelbehälters ist mit dem Anschlusskörper strömungsverbunden. In dem Aufnahmeraum kann Staub gesammelt werden. Der Staubsammelbehälter ist beispielsweise luftdurchlässig, so dass der Staubluftstrom den Staubsammelbehälter durchströmen kann, jedoch die Partikel oder der Staub im Aufnahmeraum des Staubsammelbehälters zurückgehalten werden.

Vorteilhaft weist der Staubsammelbehälter einen flexiblen Staubbehälter, beispielsweise aus Textilgewebe oder dergleichen, sowie einen Stützkörper zum Stützen des Staubbehälters in einer den Staubbehälter aufspannenden oder offen haltenden oder zur Aufnahme von Staub geeigneten Aufnahmestellung auf. Der Stützkörper ist beispielsweise stabförmig und/oder umfasst einen Stützstab oder eine Stabkontur. Der Stützkörper kann federnd nachgiebig sein.

Vorteilhaft ist vorgesehen, dass eine Partie des Staubsammelbehälters, die dem Handgriff in einem zum Umgreifen des Handgriffs vorgesehenen Position des Handgriffs gegenüberliegt, keinen Abschnitt des Stützkörpers aufweist und/oder nicht durch den Stützkörper unmittelbar abgestützt ist derart, dass ein Bediener in eine weiche Partie des Staubsammelbehälters im Sinne eines Verdrängens des Staubsammelbehälters beim Umgreifen des Handgriffs eingreifen kann.

Ein vorteilhaftes Konzept sieht vor, dass der Stützkörper einen sich von dem Anschlusskörper weg erstreckenden Stützkörper-Längsabschnitt und einen zu dem Stützkörper-Längsabschnitt quer verlaufenden Stützkörper-Querabschnitt aufweist. Der Stützkörper ist so an dem Anschlusskörper angeordnet, dass der Stützkörper-Längsabschnitt im an der Hand-Werkzeugmaschine montierten Zustand der Staubabfuhrvorrichtung an einer von einem Handgriff und/oder Energiespeicher der Hand-Werkzeugmaschine abgewandten Seite verläuft und der Stützkörper-Querabschnitt zu dem Handgriff und/oder Energiespeicher zugewandt ist. Somit kann also ein Bediener, der den Handgriff ergreift oder den Energiespeicher betätigt, beispielsweise um ihn an der Hand-Werkzeugmaschine zu befestigen oder von dieser zu entfernen, in einen weichen Abschnitt des flexiblen Staubbehälters eingreifen, ohne dass der Stützkörper stören würde. Beispielsweise ist der Stützkörper L-förmig. Eine längere Partie des Stützkörpers bildet den Stützkörper-Längsabschnitt, während eine kürzere Partie des Stützkörpers den Stützkörper-Querabschnitt bildet.

Vorteilhaft ist der Anschlusskörper entlang einer Steckachse an den Staubabfuhranschluss ansteckbar. Somit ist eine einfache Steck-Betätigung möglich. Wenn der Anschlusskörper an den Staubabfuhranschluss angesteckt ist, kann die Klemmeinrichtung anhand des Schwenkhebels zwischen der Freigabestellung und der Klemmstellung verstellt werden, um so die Staubabfuhrvorrichtung fest am Staubabfuhranschluss zu befestigen.

Die Steckachse und die Schwenkachse des Schwenkhebels sind vorzugsweise parallel zueinander oder weisen einen kleinen Winkel zueinander auf, der maximal 5° beträgt.

An dem Anschlusskörper ist vorzugsweise mindestens eine Formschlusskontur zum Eingriff in eine Gegen-Formschlusskontur des Staubabfuhranschlusses oder eine an dem Staubabfuhranschluss angeordnete Gegen-Formschlusskontur angeordnet. Die Formschlusskontur und die Gegen-Formschlusskontur greifen vorzugsweise im an der Hand-Werkzeugmaschine montierten Zustand der Staubabfuhrvorrichtung ineinander ein.

Die mindestens eine Formschlusskontur ist eine von den freien Endbereichen der Klemmschenkel separate Formschlusskontur und/oder abseits der freien Endbereiche angeordnete Formschlusskontur.

Die mindestens eine Formschlusskontur umfasst vorzugsweise mindestens einen Formschlussvorsprung, der in den Aufnahmequerschnitt des Anschlusskörpers und/oder vor eine Innenumfangswandfläche des Anschlusskörpers vorsteht. In den Aufnahmequerschnitt bzw. einen durch die Innenumfangswandfläche definierten Innenraum greift der Staubabfuhranschluss, beispielsweise ein Rohrkörper desselben, ein, wobei an diesem Rohrkörper dann die oder eine Gegen-Formschlusskontur angeordnet ist. Die beispielsweise rohrförmige Innenumfangswandfläche des Anschlusskörpers begrenzt und/oder definiert beispielsweise den Aufnahmequerschnitt des Anschlusskörpers. Der Formschlussvorsprung ist z.B. in der Art eines Nockens ausgestaltet. Die Gegen-Formschlusskontur weist beispielsweise eine Aufnahmevertiefung zur Aufnahme des Formschlussvorsprungs auf.

Es ist auch möglich, dass die mindestens eine Formschlusskontur außerhalb des Aufnahmequerschnitts nach außen vor den Anschlusskörper vorsteht, beispielsweise außen an einem rohrförmigen Abschnitt des Anschlusskörpers angeordnet ist. Beispielsweise ist die Formschlusskontur an einem Außenumfang des Anschlusskörpers angeordnet. Diese Formschlusskontur kann beispielsweise die nachfolgend erläuterte Verschlusspartie oder eine keine Funktion einer Verschlusspartie erfüllende Formschlusskontur sein.

Die Staubabfuhrvorrichtung, insbesondere die mindestens eine Formschlusskontur, umfasst vorzugsweise eine Verschlusseinrichtung und/oder Verschlusspartie für einen Fremdlufteinlass der Hand-Werkzeugmaschine, nämlich beispielsweise der Schleifmaschine, zum Einlassen von Fremdluft in den Staubabfuhrraum. Der Fremdlufteinlass ist neben dem Staubabfuhranschluss oder stromauf des Staubabfuhranschlusses angeordnet. Mithin kann also beispielsweise die Verschlusspartie zwei Funktionen erfüllen, nämlich den Fremdlufteinlass ganz oder teilweise zu verschließen, wenn die Staubabfuhrvorrichtung an dem Staubabfuhranschluss angeordnet ist, und zudem auch eine formschlüssige Verbindung zwischen der Staubabfuhrvorrichtung und der Hand-Werkzeugmaschine herstellen.

Die Verschlusseinrichtung umfasst z.B. eine Verschlusspartie oder ist durch eine Verschlusspartie gebildet.

Die Verschlusseinrichtung und/oder Verschlusspartie ist dazu vorgesehen und/oder ausgestaltet, ein Strömungsquerschnitt des Fremdlufteinlasses ganz oder teilweise zu verschließen, insbesondere wenn die Staubabfuhrvorrichtung an der Hand-Werkzeugmaschine angeordnet und/oder befestigt ist.

Ein Strömungsquerschnitt des Fremdlufteinlasses ist durch die Verschlusspartie vollständig oder vorzugsweise zu mindestens 90 %, noch weiter bevorzugt zu mindestens 95 % oder 97 % verschließbar.

Der Fremdlufteinlass ist anhand der Verschlusspartie vorzugsweise vollständig verschließbar oder luftdicht verschließbar, sodass keine Fremdluft durch den Fremdlufteinlass einströmen kann.

Es ist aber auch möglich, dass der Fremdlufteinlass durch die Verschlusspartie zwar im Wesentlichen, jedoch nicht vollständig verschließbar ist. Somit ist es möglich, dass zumindest ein Teil des Fremdlufteinlasses in einem solchen Maße strömungsoffen ist, dass eine geringe Menge Fremdluft in den Fremdlufteinlass einströmen kann. Durch die Verschlusspartie ist es vorzugsweise möglich, den Fremdlufteinlass mindestens zu 80 %, vorzugweise mindestens zu 90 %, noch weiter bevorzugt mindestens zu 95 % oder 98 % abzudecken und zu verschlie-ßen. Vorteilhaft kann vorgesehen sein, dass bei durch die Verschlusspartie abgedecktem und/oder verschlossenem Fremdlufteinlass im Vergleich zu nicht durch die Verschlusspartie abgedecktem Fremdlufteinlass maximal noch 20 %, vorzugsweise noch 15 %, noch weiter bevorzugt noch 10 % und schließlich noch weiter bevorzugt noch 5 % eines Volumenstroms der Fremdluft durch den Fremdlufteinlass einströmen kann. Wenn also die Verschlusspartie den Fremdlufteinlass verschließt und/oder verdeckt, gelangt beispielsweise mindestens 80-95 % weniger Fremdluft durch den Fremdlufteinlass als bei durch die Verschlusspartie nicht verschlossenem oder verdecktem Fremdlufteinlass.

Vorteilhaft ist vorgesehen, dass der Fremdlufteinlass abseits von dem den Staubabfuhranschluss durchströmenden Staubluftstrom angeordnet ist und/oder der Fremdlufteinlass keine Strömungsverbindung zu dem den Staubabfuhranschluss durchströmenden Staubluftstrom außerhalb des Staubabfuhrraums aufweist und/oder der Fremdlufteinlass über den Staubabfuhrraum mit dem Staubabfuhr-anschluss strömungsverbunden ist.

Die Verschlusspartie ist beispielsweise als eine Verschlusswand ausgestaltet.

Die Verschlusspartie ist vorzugsweise dazu ausgestaltet und/oder vorgesehen, den Fremdlufteinlass vollständig luftdicht zu verschließen, wenn die Verschlusspartie an dem Fremdlufteinlass angeordnet ist. Es ist aber auch möglich, dass die Verschlusspartie den Fremdlufteinlass zwar abdeckt, jedoch nicht vollständig luft-dicht oder strömungsdicht verschließt, d.h. dass die Verschlusspartie zwar am Fremdlufteinlass anliegt oder an diesem angeordnet ist, dennoch aber eine geringe Menge von Fremdluft beispielsweise durch einen Spalt oder Schlitz zwischen Verschlusspartie und Fremdlufteinlass in den Fremdlufteinlass einströmen kann.

Vorteilhaft ist es, wenn die mindestens eine Formschlusskontur eine einem Verdrehen der Staubabfuhrvorrichtung an dem Staubabfuhranschluss entgegen wirkende oder ein Verdrehen der Staubabfuhrvorrichtung bezüglich des Staubabfuhranschlusses verhindernde Verdrehsicherungskontur bildet. Die Verdrehsicherung kann nun eine exakte oder wenig Drehspiel aufweisende Verdrehsicherung sein, d.h. dass es nicht möglich ist, die Staubabfuhrvorrichtung bezüglich des Staubabfuhranschlusses abgesehen von einem zum Anstecken an den Staubabfuhranschluss notwendigen Spiel zu verdrehen. Es ist aber auch möglich, dass die Verdrehsicherung ein gewisses Drehspiel zulässt, beispielsweise von maximal 10 Grad. In beiden Fällen ist es möglich, dass ein beispielsweise klotzförmiger Staubsammelbehälter eine vorbestimmte Drehposition bezüglich des Staubabfuhranschlusses hat, so dass er beispielsweise nicht am Werkstück bei Nutzung der Hand-Werkzeugmaschine entlang streift oder streicht.

Sowohl eine in den Aufnahmequerschnitt vorstehende als auch eine außerhalb des Anschlusskörpers oder des Aufnahmequerschnitts des Anschlusskörpers angeordnete Formschlusskontur kann als eine Verdrehsicherung oder Verdrehsicherungskontur dienen und/oder eine Verdrehsicherungskontur aufweisen. Die Verdrehsicherungskontur hält die Staubabfuhrvorrichtung verdrehsicher bezüglich einer Längsachse des Staubabfuhranschlusses und/oder des Anschlusskörpers und/oder einer Steckachse, entlang derer die Staubabfuhrvorrichtung an den Staubabfuhranschluss ansteckbar ist, an dem Staubabfuhranschluss.

Vorteilhaft weist der Anschlusskörper an bezüglich der Steckachse zueinander winkelbeabstandeten Positionen, vorzugweise mindestens zwei zueinander winkelbeabstandeten Positionen, und/oder in Längsabständen bezüglich der Steckachse beabstandeten Positionen jeweils eine insbesondere als Verdrehsicherungskontur dienende Formschlusskontur auf.

Die Staubabfuhrvorrichtung weist vorzugsweise eine Steckführung zum bezüglich der Steckachse verdrehsicheren Führen des Anschlusskörpers an dem Staubabfuhranschluss auf. Diese verdrehsichere Führung kann beispielsweise nur während des Ansteckens wirksam sein, während sie bei Einsatz der Klemmeinrichtung bzw. in der Klemmstellung nicht wirksam ist. Die Verdrehsicherung kann aber auch in der Klemmstellung wirksam sein. Auch hier sei bemerkt, dass die Verdrehsicherung bzw. die verdrehsichere Führung ein Drehspiel bezüglich der Steckachse ermöglichen kann, beispielsweise von maximal 10 Grad.

Die mindestens eine Formschlusskontur hält vorzugsweise beim Eingriff in die Gegen-Formschlusskontur der Hand-Werkzeugmaschine die Staubabfuhrvorrichtung formschlüssig zugfest bezüglich der Steckachse und/oder verdrehsicher bezüglich der Steckachse an dem Staubabfuhranschluss. Beispielsweise greifen die Formschlusskontur und Gegen-Formschlusskontur in der Klemmstellung ineinander ein. Somit ist beides möglich, nämlich zum einen eine Klemm-Fixierung, zum anderen auch eine formschlüssige Fixierung. Vorteilhaft ist vorgesehen, dass die Formschlusskontur und die Gegen-Formschlusskontur in der Freigabestellung außer Eingriff sind und/oder der Anschlusskörper in der Freigabestellung derart aufgeweitet ist, dass die Formschlusskontur und die Gegen-Formschlusskontur außer Eingriff bringbar sind.

Die mindestens eine Formschlusskontur und/oder die mindestens eine Gegen-Formschlusskontur weist vorzugsweise eine mit einer Richtungskomponente parallel zu einer Achse, beispielsweise zur Steckachse oder zur Längsachse des Anschlusskörpers bzw. des Staubabfuhranschlusses, oder im Wesentlichen oder exakt parallel zu der Achse verlaufende Längs-Formschlusskontur bzw. Längs-Gegen-Formschlusskontur auf, die beispielsweise als Verdrehsicherung bezüglich der Achse, beispielsweise der Steckachse, wirken, wenn die Längs-Formschlusskontur und die Längs-Gegen-Formschlusskontur in Eingriff miteinander sind.

Die mindestens eine Formschlusskontur und/oder die mindestens eine Gegen-Formschlusskontur weist vorzugsweise eine quer zur Steckachse oder Längsachse des Anschlusskörpers bzw. des Staubabfuhranschlusses verlaufende Quer-Formschlusskontur bzw. Quer-Gegen-Formschlusskontur auf, die beispielsweise als Verdrehsicherung bezüglich einer Achse, insbesondere der Steckachse und/oder der jeweiligen Längsachse von Anschlusskörper oder Staubabfuhranschlusses, wirken, wenn die Quer-Formschlusskontur und die Quer-Gegen-Formschlusskontur in Eingriff miteinander sind. Die Quer-Formschlusskontur und/oder die Quer-Gegen-Formschlusskontur sind vorzugsweise rechtwinkelig oder in einem Winkel zwischen 85 und 95° zu der Achse, beispielsweise zur Steckachse und/oder zur jeweiligen Längsachse des Anschlusskörpers und/oder des Staubabfuhranschlusses, orientiert Die Verdrehsicherung kann ein Drehspiel bezüglich der Steckachse aufweisen, d.h. dass auch dann, wenn die Quer-Formschlusskontur und die Quer-Gegen-Formschlusskontur ineinander eingreifen, der Anschlusskörper um Achse, beispielsweise die Steckachse, relativ zu dem Staubabfuhranschluss um ein vorbestimmtes, jedoch begrenztes Drehspiel drehbar ist. Das Drehspiel beträgt beispielsweise maximal 20°, bevorzugt maximal 15°, noch weiter bevorzugt maximal 10° oder maximal 5°.

Vorteilhaft ist der Aufnahmequerschnitt im Wesentlichen kreisrund und/oder weist eine homogene und/oder flächige Innenumfangswandfläche auf.

Die mindestens eine Formschlusskontur steht beispielsweise vor die Innenumfangswandfläche vor.

Vorzugsweise ist vorgesehen, dass die mindestens eine in den Aufnahmequerschnitt und/oder die Innenumfangswandfläche vorstehende Formschlusskontur in der Freigabestellung der Klemmeinrichtung außer Eingriff mit der Gegen-Formschlusskontur gelangen kann oder gelangt, sodass der Anschlusskörper entlang der Steckachse von dem Staubabfuhranschluss entfernbar ist. Der Anschlusskörper weist also in der Freigabestellung der Klemmeinrichtung einen derartigen Aufnahmequerschnitt auf, dass die mindestens eine in den Aufnahmequerschnitt und/oder die Innenumfangswandfläche vorstehende Formschlusskontur außerhalb einer Umhüllenden des Staubabfuhranschlusses im Bereich der Gegen-Formschlusskontur ist, sodass die Formschlusskontur an der Gegen-Formschlusskontur entlang der Steckachse vorbei bewegbar ist.

Der Aufnahmequerschnitt des Anschlusskörpers, in den die mindestens eine Formschlusskontur vorsteht, ist vorzugsweise der der Klemmstellung zugeordneten Aufnahmequerschnitt.

Nachfolgend wird ein Ausführungsbeispiel der Erfindung anhand der Zeichnung erläutert. Es zeigen:
- Figur 1: eine perspektivische Schrägansicht einer Hand-Werkzeugmaschine mit einem Staubsammelbehälter,
- Figur 2: die Schrägansicht der Hand-Werkzeugmaschine gemäß Figur 1, jedoch mit einem angeschlossenen Saugschlauch,
- Figur 3: die Hand-Werkzeugmaschine gemäß Figur 2 von unten,
- Figur 4: eine Seitenansicht der Hand-Werkzeugmaschine gemäß vorstehender Figuren, teilweise geschnitten,
- Figur 5: eine perspektivische Schrägansicht eines Schnitts durch einen vorderen Teil der Hand-Werkzeugmaschine gemäß Figur 1, etwa entlang einer Schnittlinie A-A in Figur 1,
- Figur 6: eine Schnittansicht ähnlich wie Figur 5, jedoch durch die Hand-Werkzeugmaschine gemäß Figur 2 und direkt von oben, etwa entlang einer Schnittlinie B-B in Figur 2,
- Figur 7: eine Explosionsdarstellung der Hand-Werkzeugmaschine gemäß vorstehender Figuren,

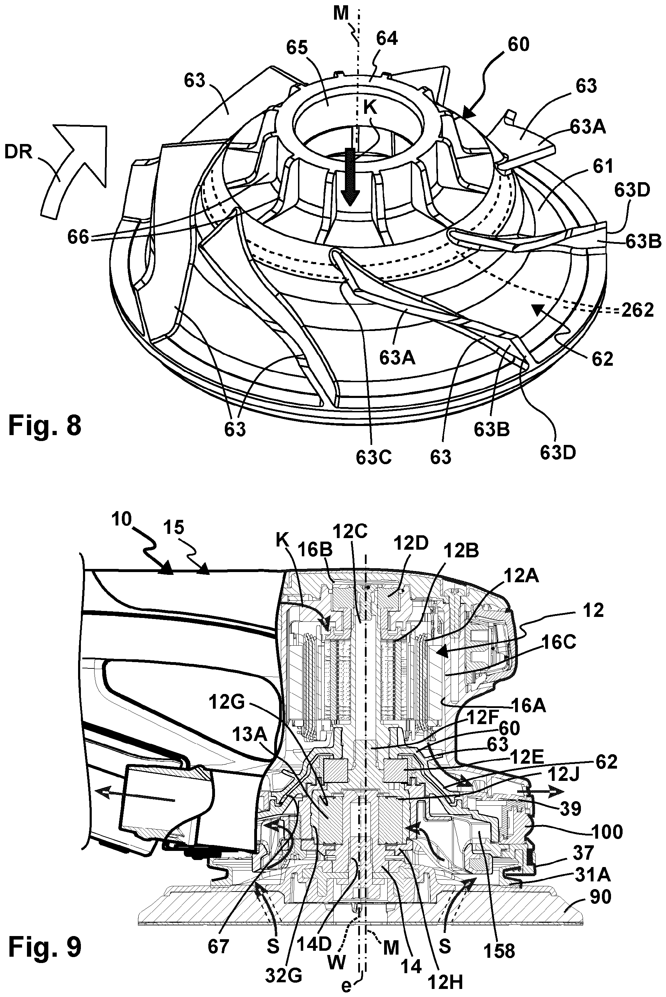

- Figur 8: eine perspektivische Schrägansicht eines Staubluftrads der Hand-Werkzeugmaschine,
- Figur 9: einen Längsschnitt durch einen vorderen Teil der Hand-Werkzeugmaschine gemäß vorstehender Figuren, etwa entsprechend der Schnittdarstellung gemäß Figur 4,
- Figur 10: einen Lagerträger, ein Motorlager und einen Antriebsmotor der Hand-Werkzeugmaschine,

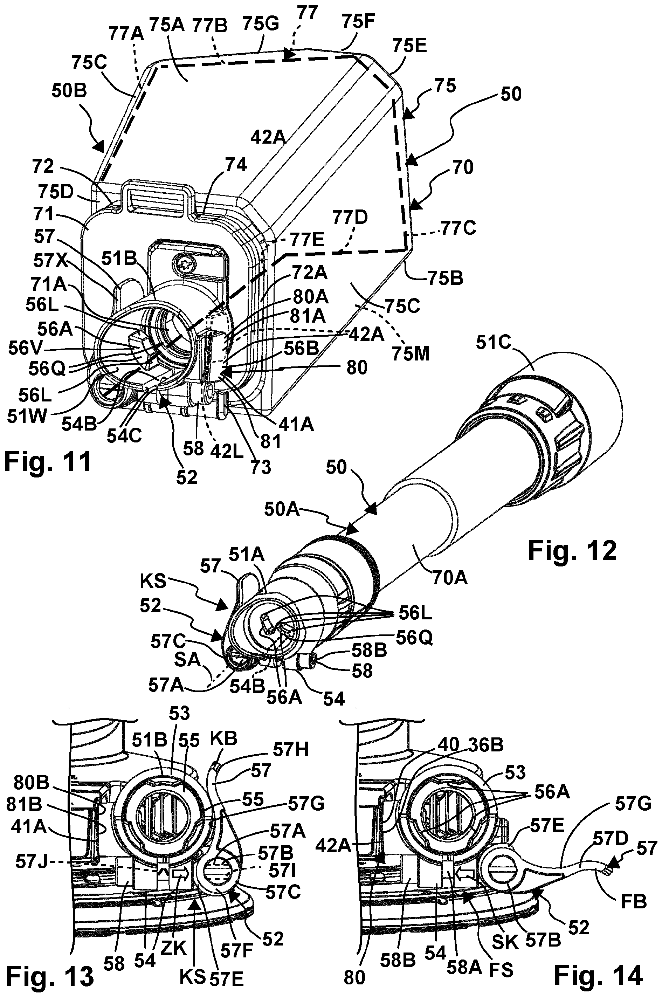

- Figur 11: eine perspektivische Schrägansicht einer Staubsammelvorrichtung mit einer Klemmeinrichtung zum Anschluss an die Hand-Werkzeugmaschine,
- Figur 12: eine perspektivische Schrägansicht eines Saugschlauchs mit einer Klemmeinrichtung zum Anschluss an die Hand-Werkzeugmaschine,
- Figur 13: eine hintere Teilansicht der Hand-Werkzeugmaschine gemäß vorstehender Figuren mit der in den Figuren 11 oder 12 dargestellten Klemmeinrichtung des Staubsammelbehälters in Klemmstellung (wobei der Staubsammelbehälter ansonsten nicht dargestellt ist),
- Figur 14: die Ansicht gemäß Figur 13 mit der Klemmeinrichtung in Freigabestellung,

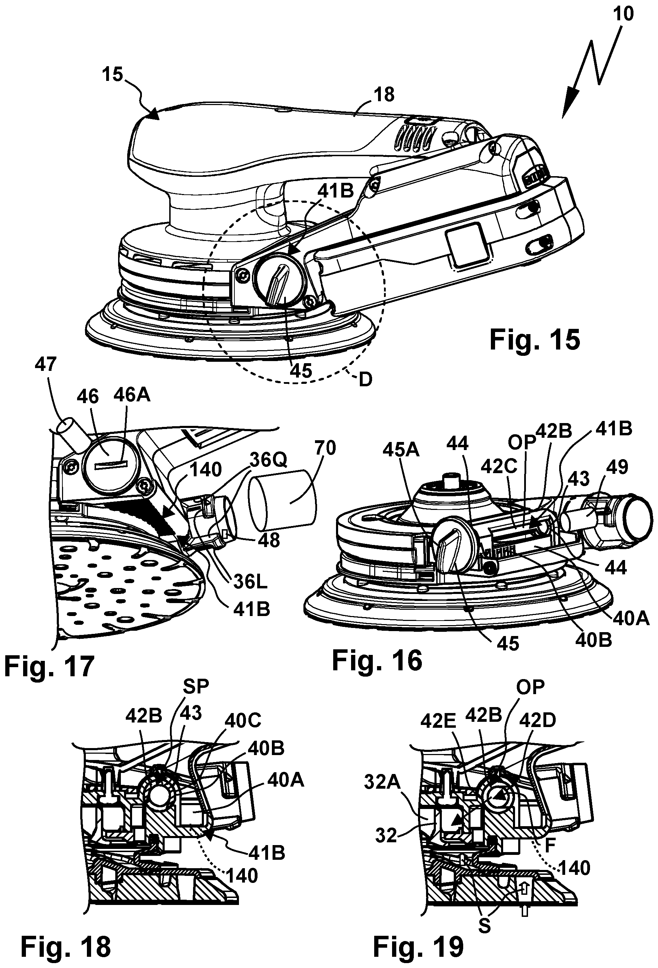

- Figur 15: eine Variante der Hand-Werkzeugmaschine gemäß vorstehender Figuren mit einer Verschlusseinrichtung zum Verschließen eines Fremdlufteinlasses,
- Figur 16: eine perspektivische Detailansicht der Variante gemäß Figur 15, wobei ein oberer und hinterer Teil der Hand-Werkzeugmaschine nicht dargestellt sind,
- Figur 17: eine perspektivische Detailansicht von unten einer Variante der Hand-Werkzeugmaschine mit einer weiteren Verschlusseinrichtung, etwa entsprechend einem Detail D in Figur 15,
- Figur 18: eine Schnittansicht durch das Detail gemäß Figur 17, etwa entlang einer in Figur 6 eingezeichneten Schnittlinie C-C, mit der Verschlusseinrichtung in Schließstellung,
- Figur 19: die Schnittansicht gemäß Figur 18, jedoch mit der Verschlusseinrichtung in Offenstellung,

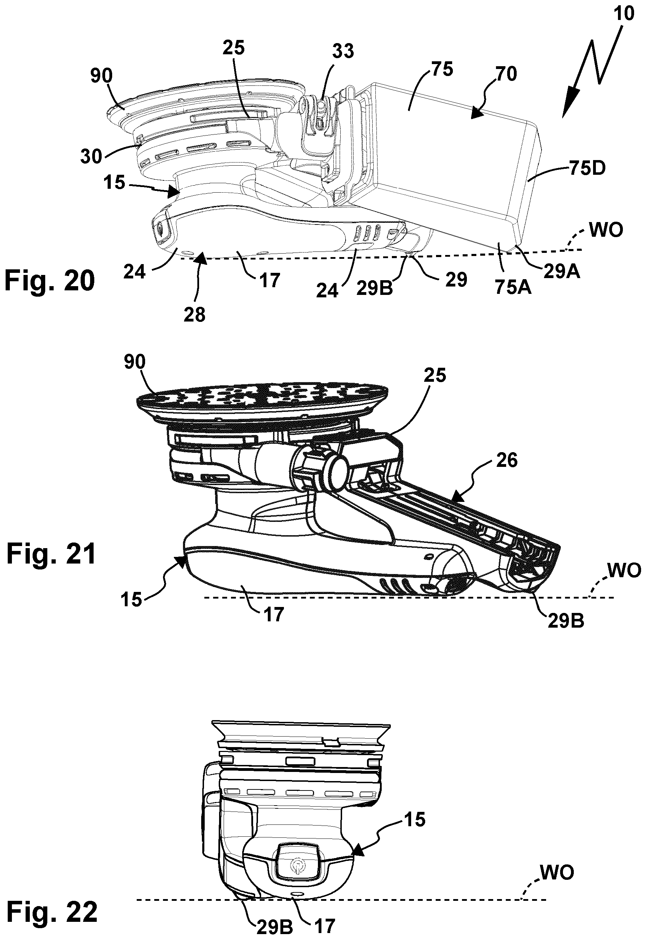

- Figur 20: die Hand-Werkzeugmaschine gemäß Figur 1 mit ihrer Oberseite abgelegt auf einem Untergrund,
- Figur 21: Hand-Werkzeugmaschine in der Position gemäß Figur 20, jedoch ohne Energiespeicher und Staubsammelbehälter, und
- Figur 22: die Hand-Werkzeugmaschine in der Position gemäß Figur 20, jedoch von vorn und ohne Staubsammelbehälter und einem kleineren Tellerwerkzeug.

Eine Hand-Werkzeugmaschine 10 gemäß der Zeichnung ist beispielsweise als eine Schleifmaschine 11 ausgestaltet. Die Hand-Werkzeugmaschine 10 weist einen Antriebsmotor 12 auf, dessen Abtrieb sich um eine Motorachse M dreht und ein Getriebe 13 antreibt, beispielsweise ein Exzentergetriebe, Oszillationsgetriebe oder dergleichen, welches seinerseits wiederum eine Werkzeugaufnahme 14 rotatorisch und/oder exzentrisch und/oder hyperzykloid antreibt.

Der Antriebsmotor 12 ist ein elektrischer Antriebsmotor. Der Antriebsmotor 12 weist beispielsweise einen Stator 12A sowie einen Rotor 12B auf.

Die Werkzeugaufnahme 14 dreht sich um eine Werkzeugachse W oder ist rotatorisch um eine Werkzeugachse W angetrieben oder antreibbar.

Die Werkzeugachse W und die Motorachse M sind beispielsweise zueinander exzentrisch.

Das Getriebe 13 ist oder umfasst beispielsweise ein Exzentergetriebe oder Exzenterlager 13A.

Der Antriebsmotor 12 und das Getriebe 13 bilden einen Antriebsstrang 13B oder zumindest Teile eines Antriebsstrangs 13B, der in einem Maschinengehäuse 15 der Hand-Werkzeugmaschine 10 aufgenommen ist.

Die Hand-Werkzeugmaschine 10 ist eine handgeführte bzw. von einem Bediener von Hand zu führende oder führbare Hand-Werkzeugmaschine. Dementsprechend kann der Bediener die Hand-Werkzeugmaschine frei an einer Werkstückoberfläche WO entlangführen, beispielsweise in einer Haupt-Arbeitsrichtung HA nach vorn oder entgegen der Haupt-Arbeitsrichtung HA nach hinten oder quer zu der Haupt-Arbeitsrichtung HA.

Das Maschinengehäuse 15 weist eine Antriebspartie 16 auf, die den Antriebsmotor 12 und das Getriebe 13, mithin also den Antriebsstrang, aufnimmt. Die Antriebspartie 16 weist beispielsweise eine Motoraufnahme 16A zur Aufnahme des Antriebsmotors 12 auf.

An der Antriebspartie 16 ist ein Griffabschnitt 17, der beispielsweise eine Handauflage aufweist oder dadurch gebildet ist, angeordnet. Der Griffabschnitt 17 oder die Handauflage eignet sich zum Ergreifen mit einer Hand eines Bedieners und/oder zur Auflage einer Hand eines Bedieners.

Von der Antriebspartie 16 steht ein Handgriff 18 ab, beispielsweise entgegen der Haupt-Arbeitsrichtung HA. Der Griffabschnitt 17 und der Handgriff 18 sind beispielsweise an einem vorderen Abschnitt oder einer Vorderseite 19 und einem hinteren oder rückwärtigen Abschnitt oder einer Rückseite 20 des Maschinengehäuses 15 bezüglich der Haupt-Arbeitsrichtung HA angeordnet.

Die Werkzeugaufnahme 14 und/oder die Werkzeugachse W und/oder die Motorachse M befinden sich etwa in dem Bereich einer Längsmittelebene 23, die sich von der Vorderseite 19 zur Rückseite 20 der Hand-Werkzeugmaschine 10 erstreckt. Der Griffabschnitt 17 ist an einer Oberseite 24 der Hand-Werkzeugmaschine 10 angeordnet, während die Werkzeugaufnahme 14 an einer der Oberseite 24 entgegengesetzten Unterseite 25 angeordnet ist. Die Unterseite 25 ist zum Entlangführen der Hand-Werkzeugmaschine 10 an der Werkstückoberfläche WO vorgesehen oder liegt beim Betrieb der Hand-Werkzeugmaschine 10 der Werkstückoberfläche WO gegenüber.

Die Hand-Werkzeugmaschine 10 ist vorzugsweise eine batterie-betriebene oder akku-betriebene Hand-Werkzeugmaschine. Ohne weiteres wären die nachfolgend erläuterten Konzepte zur Staubabfuhr, zur Ausgestaltung des Antriebsstrangs und zur optimierten Anbringung oder einer Staubsammeleinrichtung auch bei einer netzgebundenen Hand-Werkzeugmaschine realisierbar. In diesem Fall hätte die Hand-Werkzeugmaschine 10 beispielsweise ein Anschlusskabel zum Anschluss an ein Stromversorgungsnetz.

Etwas außermittig bezüglich der Längsmittelebene 23 ist ein Energiespeicheranschluss 26 für einen elektrischen Energiespeicher 27, beispielsweise einen Akkupack, angeordnet.

Der Energiespeicheranschluss 26 ist beispielsweise an einer Haltepartie 26A des Maschinengehäuses 15 vorgesehen. Die Haltepartie 26A erstreckt sich zwischen der Antriebspartie 16 und einem von der Antriebspartie 16 entfernten Endbereich des Handgriffs 18.

Zwischen dem Handgriff 18 und der Haltepartie 26A ist eine Durchgreiföffnung 18A vorgesehen. Eine den Handgriff 18 umgreifende Hand kann in die Durchgreiföffnung 18 eingreifen.

Die Werkzeugaufnahme 14 ist innerhalb und/oder unterhalb einer Abdeckung 30 angeordnet, die sich von der Antriebspartie 16 weg zur Unterseite 25 der Hand-Werkzeugmaschine 10 erstreckt. Die Abdeckung 30 begrenzt einen Staubabfuhrraum 31, der zum Sammeln und Abführen von Staub, der bei der Bearbeitung der Werkstückoberfläche WO entsteht, vorgesehen ist.

Beispielsweise ist ein Tellerwerkzeug 90, insbesondere ein Schleifwerkzeug, lösbar an der Werkzeugaufnahme 14 befestigbar. Dazu hat das Tellerwerkzeug 90 beispielweise eine Antriebsaufnahme 91. Die Antriebsaufnahme 91 und die Werkzeugaufnahme 14 umfassen beispielsweise Bajonettkonturen/oder Drehmitnahmekonturen und/oder eine Schraubverbindung oder dergleichen.

Das Tellerwerkzeug 90 weist eine Bearbeitungsfläche 92 auf, beispielsweise eine Schleiffläche oder Polierfläche, wobei die Schleiffläche auch durch ein Schleifmittel, welches lösbar am Tellerwerkzeug 90 befestigbar ist, gebildet sein kann. An der Bearbeitungsfläche 92 sind Einströmöffnungen 93 angeordnet, in die Luft einströmen kann. Beispielsweise kann ein mit Staub beladener Luftstrom, also ein Staubluftstrom S, durch die Einströmöffnungen 93 hindurch in Richtung des Staubabfuhrraums 31 strömen, wobei der Staubluftstrom S an mit den Einströmöffnungen 93 strömungsverbundenen Ausströmöffnungen 94 an einer der Bearbeitungsfläche 92 entgegengesetzten und zur Montage an der Hand-Werkzeugmaschine 10 vorgesehenen Montageseite 95 des Tellerwerkzeugs 90 ausströmen kann.

Eine ringförmige Dichtung 31A oder Dichtmanschette umgibt den Staubabfuhrraum 31. Die Dichtung 31A ist beispielsweise dem Maschinengehäuse 15 gehalten und liegt an der Montageseite 95 des Tellerwerkzeugs 90 an. Die Ausströmöffnungen 94 sind in einem von der Dichtung 31A umgebenen Innenraum angeordnet.

Es ist möglich, dass der Staubabfuhrraum 31 beispielsweise anhand eines Staubsaugers STA abgesaugt wird. In diesem Fall ist eine aktive Erzeugung eines Staubluftstroms durch die Hand-Werkzeugmaschine 10 nicht notwendig, aber möglich.

Im vorliegenden Fall weist die Hand-Werkzeugmaschine 10 oder Schleifmaschine 11 jedoch eine aktive Erzeugung des Staubluftstroms auf oder ist zu einer aktiven Erzeugung des Staubluftstroms ausgestaltet. Innerhalb des Staubabfuhrraums 31 ist ein Staubluftrad 32 angeordnet, welches vom Antriebsmotor 12 angetrieben oder antreibbar ist. Beispielsweise ist das Staubluftrad 32 am Abtrieb des Antriebsmotors 12 angeordnet.

Das Staubluftrad 32 kann den Staubluftstrom S auch dann unterstützen, wenn der Staubsauger STA an den Staubabfuhranschluss 33 angeschlossen ist.

Das Staubluftrad 32 erzeugt also einen Staubluftstrom S oder unterstützt dessen Strömung.

Das Staubluftrad 32 ist drehfest mit einer Motorwelle 12C des Antriebsmotors 12 verbunden, die den Abtrieb des Antriebsmotors 12 darstellt. Der Antriebsmotor 12 oder die Motorwelle 12C dreht in einer Drehrichtung DR.

Das Staubluftrad 32 dreht in der Drehrichtung DR, so dass der Staubluftstrom S mit der Drehrichtung DR den Staubabfuhrraum 31 durchströmt und in den Staubabfuhranschluss 33 einströmt.

Das Staubluftrad 32 und optional der Staubsauger STA erzeugen einen Luftstrom, der Partikel, Staub oder dergleichen, der z.B. bei der Bearbeitung der Werkstückoberfläche WO anfällt, durch die Einströmöffnungen 93 des Tellerwerkzeugs 90 ansaugt. Der solchermaßen erzeugte Staubluftstrom S strömt aus den Ausströmöffnungen 94 in den Staubabfuhrraum 31 ein, wo ihn das Staubluftrad 32 in Richtung des Staubabfuhranschlusses 33 weiterfördert.

Der Staubabfuhranschluss 33 ist beispielsweise als ein Abfuhr-Anschlussrohr 34 oder ein Abfuhr-Anschlussstutzen 35 ausgestaltet oder weist ein Anschlussrohr 34 oder einen Anschlussstutzen 35 auf.

Der Staubabfuhranschluss 33 ist vorzugsweise etwa tangential bezüglich des Staubluftrads 32 angeordnet.

Der Staubabfuhranschluss 33 ist vorteilhaft außermittig bezüglich der Längsmittelebene 23 angeordnet, beispielsweise nahe bei der Längsseite 23. Somit strömt also die Staubluft oder der Staubluftstrom S exzentrisch zur Werkzeugachse W tangential zu derselben aus dem Staubabfuhrraum 31 aus.

An den Staubabfuhranschluss 33 kann eine Staubabfuhrvorrichtung 50 angeschlossen werden.

Prinzipiell ist die Hand-Werkzeugmaschine 10 oder Schleifmaschine 11 auch ohne Staubabfuhrvorrichtung 50 betreibar, wobei dann der Staubluftstrom S über den Staubabfuhranschluss 33 in die Umgebung ausgeblasen wird.

Die Staubabfuhrvorrichtung 50 ist beispielsweise eine Staubabfuhrvorrichtung 50A in Gestalt eines Saugschlauchs 70A oder eine Staubabfuhrvorrichtung 50B im Falle einer Staubsammelvorrichtung 70.

Beide Staubabfuhrvorrichtungen 50A und 50B können durch den Staubabfuhranschluss 33 strömenden Staub aufnehmen. Beispielsweise kann der Staubsauger STA Staub aufnehmen. Ferner kann die Staubsammelvorrichtung 70 Staub sammeln.

Beide Staubabfuhrvorrichtungen 50A und 50B können wahlweise an den Staubabfuhranschluss 33 angeschossen werden und weisen zu diesem Zweck einen rohrförmigen Anschlusskörper 51A oder 51B auf. Die Anschlusskörper 51A oder 51B können entlang einer Steckachse ST an den Staubabfuhranschluss 33, beispielsweise das Abfuhr-Anschlussrohr 34, angesteckt oder durch eine Zugbewegung vom Staubabfuhranschluss 33 abgezogen werden.

Beide Staubabfuhrvorrichtungen 50A und 50B werden in der nachfolgenden Beschreibung teilweise auch generell als Staubabfuhrvorrichtung 50 bezeichnet.

Die Anschlusskörper 51A, 51B werden ebenfalls auch generell als Anschlusskörper 51 bezeichnet, insbesondere dann, wenn bei beiden Staubabfuhrvorrichtungen 50A, 50B oder Anschlusskörpern 51A, 51B gleiche oder gleichartige Komponenten vorhanden sind.

Die Anschlusskörper 51A und 51B sind mit Klemmeinrichtungen 52 ausgestattet, mit denen die Staubabfuhrvorrichtungen 50A und 50B am Staubabfuhranschluss 33 verklemmbar sind.

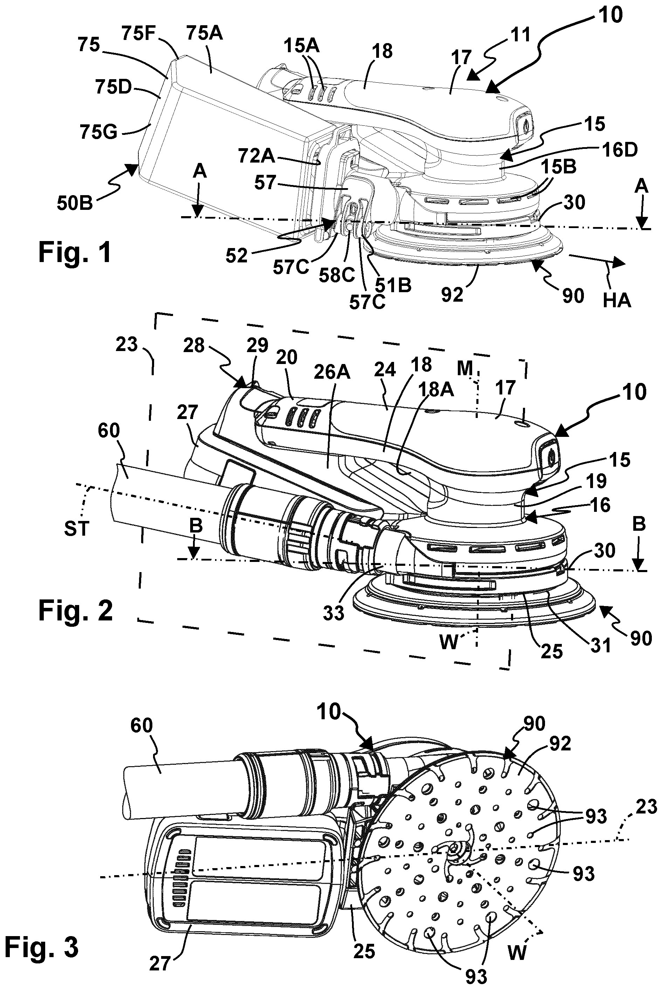

Bei dem Anschlusskörper 51A ist auch eine in den Figuren 2 und 3 dargestellte Variante möglich, die ohne eine Klemmeinrichtung 52 auskommt. Insbesondere ist diese Ausgestaltung ohne Klemmeinrichtung 52 wahlweise denkbar, wenn die nachfolgende optionale Maßnahme eine Formschlusskontur an dem rohrförmigen Anschlusskörper 51A vorgesehen ist.

Zudem ist als optionale Maßnahme mindestens eine Formschlusskontur 56A vorgesehen, die nach radial innen in den Anschlusskörper 51A oder 51B vorsteht und in Eingriff mit mindestens einer Gegen-Formschlusskontur 36 am Anschlussrohr 34 oder Anschlussstutzen 35 gelangen kann.

Es können beispielsweise an einander entgegengesetzten Seiten und/oder in einem Winkelabstand bezüglich einer Längserstreckung oder Längserstreckungsachse des Anschlusskörpers 51A oder 51B eine, zwei oder mehr Formschlusskonturen 56A vorgesehen sein. Beispielhaft und schematisch ist beim Anschlusskörper 51B sind zwei Formschlusskonturen 56A eingezeichnet, wobei die Winkelposition und/oder der Längsabstand bezüglich der Steckachse ST der Formschlusskonturen 56A relativ zueinander nur schematisch dargestellt und exemplarisch zu verstehen ist. Insbesondere ist die in der Zeichnung rechte Formschlusskontur 56A in der Nähe des Spaltes oder Schlitzes 54B dargestellt, damit sie sichtbar ist.

Die mindestens eine Gegen-Formschlusskontur 36 ist radial außen außerhalb eines Strömungsquerschnitts des Staubabfuhranschlusses 33 angeordnet. Beispielsweise ist die Gegen-Formschlusskontur 36 als eine Anordnung von Formschlussaufnahmen und/oder Formschlussvorsprüngen oder dergleichen ausgestaltet und/oder umfasst eine solche Anordnung. Die mindestens eine Gegen-Formschlusskontur 36 umfasst beispielsweise Rippen, Vorsprünge oder dergleichen, die vor eine Außenumfangswandfläche des Staubabfuhranschlusses 33 vorstehen.

Die mindestens eine Formschlusskontur 56A umfasst beispielsweise einen oder mehrere Formschlussvorsprünge 56V. Die mindestens eine Formschlusskontur 56A und/oder die Formschlussvorsprünge 56V steht oder stehen beispielsweise vor eine Innenumfangswandfläche 51W des Anschlusskörpers 51 vor.

Die Innenumfangswandfläche 51W ist beispielsweise als eine im Wesentlichen runde Innenwandfläche ausgestaltet. Die Innenumfangswandfläche 51B begrenzt beispielsweise den Aufnahmequerschnitt 55.

Die mindestens eine Gegen-Formschlusskontur 36 umfasst beispielsweise eine Vertiefung 36V und die Formschlusskontur 56A umfasst beispielsweise einen Formschlussvorsprung 56V zum Eingriff in die Vertiefung 36V.

Wenn die mindestens eine Formschlusskontur 56A in die mindestens eine Gegen-Formschlusskontur 36 eingreift, ist die Staubabfuhrvorrichtung 50 beispielsweise entgegen der Steckachse ST, entlang derer, die Staubabfuhrvorrichtung 50 an den Staubabfuhranschluss 33 ansteckbar ist, zugfest fixiert.

Die mindestens eine Formschlusskontur 56A und die mindestens eine Gegen-Formschlusskontur 36 bilden vorteilhaft eine Verdrehsicherung, insbesondere im Zusammenhang mit einer nachfolgend noch im Detail erläuterten Formschlusskontur 56B, die im Falle der Staubsammelvorrichtung 70 an deren Anschlusskörper oder nahe bei deren Anschlusskörper 51B vorgesehen ist.

Einen besonders guten Halt der Staubabfuhrvorrichtung 50 am Staubabfuhranschluss 33 ermöglicht die Klemmeinrichtung 52. Die Klemmeinrichtung 52 ist zwischen einer Klemmstellung KS, in der ein Aufnahmequerschnitt 55 des Anschlusskörpers 51 verengt ist, und einer Freigabestellung FS verstellbar, in der der Aufnahmequerschnitt 55 derart groß ist, dass die Staubabfuhrvorrichtung 50 entlang der Steckachse ST vom Staubabfuhranschluss 33 entfernbar ist.

Vorteilhaft ist der Aufnahmequerschnitt 55 in der Freigabestellung FS derart groß, dass auch die Formschlusskontur 56A außer Eingriff mit der Gegen-Formschlusskontur oder den Gegen-Formschlusskonturen 36 gelangen kann. Die Formschlusskontur 56A ist beispielsweise als ein Formschlussvorsprung ausgestaltet, der in den Aufnahmequerschnitt 55 vorsteht.

Die Formschlusskontur 56A umfasst quer zur Steckachse ST verlaufende Quer-Formschlusskonturen 56Q. Die Gegen-Formschlusskonturen 36 umfasst quer zur Steckachse ST verlaufende Quer-Gegen-Formschlusskonturen 36Q. Wenn der Staubabfuhranschluss 33 in den Anschlusskörper 51A oder 51B eingreift und die Quer-Formschlusskonturen 56Q und die Quer-Gegen-Formschlusskonturen 36Q ineinander eingreifen, ist der Anschlusskörper 51A, 51B in Bezug auf die Steckachse ST zugfest an dem Staubabfuhranschluss 33 gehalten.

Die Formschlusskontur 56A umfasst auch mit einer Richtungskomponente zur Steckachse ST parallel oder exakt parallel zur Steckachse ST verlaufende Längs-Formschlusskonturen 56L. Die dazu korrespondierende Gegen-Formschlusskontur 36 umfasst mit einer Richtungskomponente zur Steckachse ST parallele oder exakt zur Steckachse ST parallel verlaufende Längs-Gegen-Formschlusskonturen 36L. Wenn der Staubabfuhranschluss 33 in den Anschlusskörper 51A oder 51B eingreift und die Längs-Formschlusskonturen 56L und die Längs-Gegen-Formschlusskonturen 36L ineinander eingreifen, ist der Anschlusskörper 51A, 51B verdrehsicher bezüglich einer Verdrehung um die Steckachse ST am Staubabfuhranschluss 33 gehalten.

Die Längs-Gegen-Formschlusskonturen 36L und die Quer-Gegen-Formschlusskonturen 36Q begrenzen beispielsweise die mindestens eine Vertiefung 36V. Vorzugsweise sind mehrere Vertiefungen 36V vorgesehen, die vorteilhaft einen Längsabstand bezüglich der Steckachse ST, die einer Längsachse des Staubabfuhranschlusses 33 im Wesentlichen entspricht, und/oder einen Winkelabstand bezüglich der Steckachse ST aufweisen.

Es ist auch möglich, dass in der Freigabestellung FS der Aufnahmequerschnitt 55 derart groß ist, dass die Formschlusskontur 56A relativ zu der mindestens einen Formschlusskontur 56 drehbar ist, sodass die Formschlusskonturen 56 und 56A in eine derartige Drehposition bringbar sind, dass sie entlang der Steckachse ST aneinander vorbei verschieblich sind.

Die Klemmeinrichtung 52 weist eine Klemmschelle 53 auf.

Die Klemmschelle 53 kann beispielsweise durch Abschnitte des Anschlusskörpers 51A oder 51B gebildet sein.

Die Klemmschelle 53 kann auch in nicht dargestellter Weise eine den Anschlusskörper 51A oder 51B umgebende, vom Anschlusskörper 51A oder 51B separate Klemmschelle, zum Beispiel in der Art einer Klemmspange, sein.

Die Klemmschelle 53 weist beispielsweise Klemmschenkel 54 auf, die in einer aufeinander zu bewegten Stellung den Aufnahmequerschnitt 55 verengen und in einer voneinander weg bewegten Stellung den Aufnahmequerschnitt 55 vergrößern.

Freie Endbereiche 54C der Klemmschenkel 54 liegen einander gegenüber, wobei zwischen den Endbereichen 54C ein Schlitz oder Spalt 54B gebildet ist, welcher in der Klemmstellung KS kleiner als in der Freigabestellung FS ist.

Zur Betätigung der Klemmeinrichtung 52 dient ein Betätigungselement 57X in Gestalt eines Schwenkhebels 57. Der Schwenkhebel 57 ist anhand eines Schwenklagers 57A um eine Schwenkachse SA an dem Anschlusskörper 51 oder nahe bei dem Anschlusskörper 51 schwenkbar gelagert.

Vorteilhaft ist die Schwenkachse SA parallel oder im Wesentlichen parallel, d. h. in einem Winkel von maximal 5° abweichend, zur Steckachse ST.

Beispielsweise weist das Schwenklager 57A einen Achskörper oder mehrere Achskörper 57B auf, die in Eingriff mit Lageraufnahmen 57C des Schwenkhebels 57 sind.

Mithin ist also der Schwenkhebel 57 anhand der Lageraufnahmen 57C an dem Achskörper 57B um die Schwenkachse SA schwenkbar gelagert.

Der Schwenkhebel 57 weist einen durch einen Bediener ergreifbaren Schwenkarm 57D auf, der vom Schwenklager 57A absteht. Der Schwenkarm 57D weist im Bereich des Schwenklagers 57A eine Betätigungskontur 57E auf, beispielsweise nahe bei der Lageraufnahme 57C. Die Betätigungskontur 57E umfasst eine Exzenter-Kontur 57F, die exzentrisch zur Schwenkachse SA verläuft. Wenn also der Schwenkhebel 57 zwischen einer der Freigabestellung FS zugeordneten Freigabe-Betätigungsstellung FB, in der der Schwenkhebel 57 vom Anschlusskörper 57 absteht, in eine der Klemmstellung KS zugeordneten Klemm-Betätigungsstellung KB verstellt wird, gelangen in zunehmendem Maße exzentrisch weiter von der Schwenkachse SA beabstandete Abschnitte der exzentrischen Betätigungskonturen 57B in Eingriff mit einer zur Abstützung der Betätigungskonturen 57B vorgesehenen Stützpartie des Anschlusskörpers 51, um einen Zuganker 58 zu betätigen und/oder linear zu verstellen. Die Stützpartie des Anschlusskörpers 51 ist beispielsweise am Außenumfang des Anschlusskörpers 51 oder des Rohrkörpers vorgesehen oder durch diesen Außenumfang gebildet.

Der Zuganker 58 durchsetzt die beiden Klemmschellen 53 im Bereich der freien Endbereiche der Klemmschenkel 54. Der Zuganker 58 weist beispielsweise einen Bolzenabschnitt 58A auf, der sich zwischen einem Stützkopf 58B und einem Mitnahmekopf 58C erstreckt. Der Bolzenabschnitt 58A durchsetzt Durchtrittsöffnungen 54A an den freien Endbereichen der Klemmschenkel 54.

Der Stützkopf 58B stützt sich an dem vom Schwenkhebel 57 entfernteren Klemmschenkel 54 außenseitig ab. Der Mitnahmekopf 58C stützt sich nahe beim Schwenkhebel 57 am Achskörper 57B ab, der eine vom Bolzenabschnitt 58A durchsetzte Aufnahme 57I aufweist.

Wenn sich also die Exzenter-Kontur 57C bei der Betätigung des Schwenkhebels 57 aus der Freigabe-Betätigungsstellung FB in die Klemm-Betätigungsstellung KB am Anschlusskörper 51 abstützt, wirkt eine Zugkraft ZK auf den Zuganker 58, durch die der Stützkopf 58B in Richtung des Schwenkhebels 57 betätigt wird, wodurch sich der Aufnahmequerschnitt 55 verengt, so dass der Anschlusskörper 51A oder 51B mit dem Staubabfuhranschluss 33, beispielsweise dem Außenumfang des Anschlussrohrs 34, verklemmt. Dadurch ist ein optimaler Klemmsitz und Halt der jeweiligen Staubabfuhrvorrichtung 50A, 50B am Staubabfuhranschluss 33 gegeben.

Wenn die Klemmeinrichtung 52 von der Klemmstellung KS in die Freigabestellung FS bewegt wird, ist es eine Option, dass beispielsweise der Zuganker 58 im Sinne eines Schubelements wirkt, beispielsweise anhand des Stützkopfes 58B. Wenn nämlich der Stützkopf 58B oder eine nahe bei diesem angeordnete Mitnahmekontur den Klemmschenkel 54, an dem der Stützkopf 58B angeordnet ist, vom anderen Klemmschenkel 54, der nahe beim Mitnahmekopf 58C ist, mitnimmt, werden die beiden Klemmschenkel 54 voneinander weg im Sinne einer Vergrößerung des Aufnahmequerschnitts 55 bewegt, zum Beispiel durch eine Schubkraft SK.

Alternativ oder ergänzend zu einer Betätigung der Klemmeinrichtung 52 von der Klemmstellung KS in Richtung der Freigabestellung FS kann auch eine Federeinrichtung 57J vorgesehen sein, beispielsweise ein elastischer blockförmiger Körper, eine Schraubenfeder oder dergleichen. Die Federeinrichtung 57J ist beispielsweise zwischen den Klemmschenkeln 54 bzw. deren freien Endbereichen angeordnet und stützt sich an den Klemmschenkeln 54 ab. Die Federeinrichtung 57J ist beispielsweise vom Bolzenabschnitt 58A des Zugankers 58 durchsetzt.

Der Schwenkarm 57C weist eine Aufnahmekontur 57G auf, beispielsweise eine muldenartige Vertiefung, in die der Anschlusskörper 51 in der Klemm-Betätigungsstellung KB eingreift und/oder in der der Anschlusskörper 51 in der Klemm-Bestätigungsstellung KB aufgenommen ist. Somit schmiegt sich der Schwenkarm 57D sozusagen an den Anschlusskörper bzw. dessen Rohrgestalt sozusagen an. In der Klemm-Betätigungsstellung KB steht jedoch ein zum Ergreifen durch einen Bediener geeigneter Griffvorsprung 57H von dem Anschlusskörper 51 ab, so dass der Bediener den Schwenkhebel 57 bequem an dem Griffvorsprung 57H zum Betätigen und/oder Verschwenken in Richtung der Freigabe-Betätigungsstellung FB ergreifen kann.

Der Anschlusskörper 51B der Staubsammelvorrichtung 70 ist an einem Tragkörper 71 angeordnet, der zum Tragen eines Staubsammelbehälters 75 dient. Der Staubsammelbehälter 75 ist an einem weiteren Tragkörper 72 gehalten. Die Tragkörper 71, 72 sind relativ zueinander verstellbar, beispielsweise schwenkbar aneinander gelagert, beispielsweise anhand eines Schwenklagers 73. Beide Tragkörper 71 und 72 weisen Durchtrittsöffnungen 71A und 72A für den Staubluftstrom S auf, wobei die Durchtrittsöffnung 71A des Tragkörpers 71 mit dem Anschlusskörper 51 strömungsverbunden ist. Wenn die Tragkörper 71, 72 voneinander weg verstellt sind, kommt die gegenüber der Durchtrittsöffnung 71A deutlich größere Durchtrittsöffnung 72A des Staubsammelbehälters 75 frei, durch die der Staubsammelbehälter 75 entleert werden kann. Der Tragkörper 71 bildet also beispielsweise einen Deckel für die Durchtrittsöffnung 72A des Tragkörpers 72.

Es ist aber auch möglich, die Staubsammelvorrichtung 70 zum Entleeren vom Staubabfuhranschluss 33 zu entfernen, so dass in dem Staubsammelbehälter 75 zurückgehaltener Staub durch den Anschlusskörper 51B hindurch entleert werden kann.

Die Tragkörper 71, 72 sind anhand einer Fixiereinrichtung 74, beispielsweise einer Klemmeinrichtung, Verriegelungseinrichtung oder dergleichen, aneinander fixierbar, so dass sie flach aneinander anliegen und eine Strömungsverbindung zwischen dem Anschlusskörper 51 und dem Staubsammelbehälter 75 gegeben ist, die Durchtrittsöffnung 72A jedoch verschlossen ist. Die Fixiereinrichtung 74 kann auch als eine Tragkörper-Fixiereinrichtung bezeichnet werden. Dementsprechend kann die Klemmeinrichtung oder Verriegelungseinrichtung eine Tragkörper-Klemmeinrichtung oder Tragkörper-Verriegelungseinrichtung sein.

Der Staubsammelbehälter 75 weist eine kubische oder klotzförmige Gestalt auf. Beispielsweise hat der Staubsammelbehälter 75 einander gegenüberliegende Seitenwände 75A, 75B, die beispielsweise obere und untere Seitenwände bilden können. Zwischen den Seitenwänden 75A, 75B erstrecken sich Längsseitenwände 75C. Der Tragkörper 72 ist beispielsweise an einer Vorderwand 75D angeordnet. An einer vom Tragkörper 72 abgewandten Seite ist der Staubsammelbehälter 75 durch eine Rückwand 75E begrenzt oder verschlossen. Die Rückwand 75E kann beispielsweise zueinander winkelige Abschnitte 75F und 75G aufweisen. Mithin ist also bis auf die Öffnung am Tragkörper 72 oder dem Anschlusskörper 51 keine Öffnung am Staubsammelbehälter 75 vorhanden.

Der Staubsammelbehälter 75 besteht vorzugsweise aus einem Filtermaterial, beispielsweise Textilmaterial oder dergleichen.

Zum Halten des Staubsammelbehälters 75 in einer offenen oder langgestreckten Form dient ein Stützkörper 77, beispielsweise aus Draht oder dergleichen. Der Stützkörper 77 ist vorzugsweise im Innenraum des Staubsammelbehälters 75 angeordnet. Stützkörper-Abschnitte des Stützkörpers 77 liegen vorzugsweise etwa im Bereich von Innenkanten des Staubsammelbehälters 75. Der Staubsammelbehälter 75 wird durch den Stützkörper 77 vorteilhaft aufgespannt.

Der Stützkörper 77 ist am Tragkörper 72 gehalten und erstreckt sich mit einem Stützkörper-Längsabschnitt 77A von diesem weg.

Im Bereich der Rückwand 75D ist ein Stützkörper-Querabschnitt 77B des Stützkörpers 77 vorgesehen, der vom Stützkörper-Längsabschnitt 77A absteht. Der Tragkörper 72 und der Stützkörper-Querabschnitt 77B bilden zusammen mit dem die beiden Komponenten verbindenden Stützkörper-Längsabschnitt 77A eine U-förmige Gestalt aus. Zur weiteren Abstützung des Staubsammelbehälters 75 dient ein von dem Stützkörper-Querabschnitt 77B zur Seitenwand 75B abstehender Stützkörper-Abschnitt 77C ab, der anhand eines Stützkörper-Abschnitts 77D und eines Stützkörper-Abschnitts 77E mit dem Tragkörper 72 verbunden ist. Die Stützkörper-Abschnitte 77B und 77D verlaufen etwa parallel zueinander, ebenso die Stützkörper-Abschnitte 77A und 77D. Beispielsweise sind die Stützkörper-Abschnitte 77A und 77B sowie die Stützkörper-Abschnitte 77D und 77E etwa L-förmig.

An der dem Handgriff 18 zugeordneten Seite des Staubsammelbehälters 75 ist kein Element des Stützkörpers 77 vorgesehen, sodass dass ein Bediener, wenn er den Handgriff 18 umgreift und/oder den Energiespeicher 27 am Energiespeicheranschluss 26 befestigt oder von diesem entfernt, in einem weichen Abschnitt 75M des Staubsammelbehälters 75 sozusagen eingreifen kann, ohne dass der Stützkörper 77 im Wege wäre.

Das Anstecken der Staubsammelvorrichtung 70 gelingt am Staubabfuhranschluss 33 einfach, indem eine Steckführung 80 und/oder eine Verdrehsicherungskontur 81 vorhanden ist, um die Staubsammelvorrichtung 70 in Bezug auf die Steckachse ST verdrehsicher am Staubabfuhranschluss 33 zu führen und zu halten.

Die Steckführung 80 umfasst eine Steckführungskontur 80A. Die Steckführungskontur 80A und die Verdrehsicherungskontur 81 sind an der Staubsammelvorrichtung 70, insbesondere an deren Anschlusskörper 51B, angeordnet.

An dem Staubabfuhranschluss 33 sind eine mit der Steckführungskontur 80A zusammenwirkende Steckführungskontur 80B sowie eine mit der Verdrehsicherungskontur 81 zusammenwirkende Verdrehsicherungskontur 81B angeordnet. Beispielsweise werden die Steckführungskontur 80B und die Verdrehsicherungskontur 81B von einer den Fremdlufteinlass 40 umgebenden Stirnseite oder Stirnwand gebildet.

Im Falle des Saugschlauchs 70A ermöglicht ein anhand der Klemmeinrichtung 52 erzielbarer fester Halt beispielsweise, dass ein Bediener gegebenenfalls den Saugschlauch 70A, der mit dem Anschlusskörper 51A verbunden ist, ergreifen kann, um die Schleifmaschine 11 an der Werkstückoberfläche WO entlang zu bewegen. Der Saugschlauch 70A weist an seinem einen Längsende den Anschlusskörper 51A und an einem dazu entgegengesetzten Längsende einen Anschlusskörper 51C um Anschluss an den Staubsauger STA auf.

Auch im Falle der Staubsammelvorrichtung 70 erweist sich der Klemmsitz des Anschlusskörpers 51B am Staubabfuhranschluss 33 als vorteilhaft, weil ein schneller Wechsel bzw. ein schnelles Austauschen der Staubsammelvorrichtung 70 ohne weiteres möglich ist. Insbesondere kann dadurch auch gleichzeitig ein nachfolgend erläuterter Fremdlufteinlass 40 durch die Staubabfuhrvorrichtung 50B verschlossen werden, der beim Anschluss der Staubabfuhrvorrichtung 50A oder des Saugschlauchs 70A offenbleibt.

Der Fremdlufteinlass 40 ist neben dem Staubabfuhranschluss 33 und nahe bei dem Staubabfuhranschluss 33 angeordnet und ermöglicht ein Einströmen von Fremdluft F in den Staubabfuhrraum 31. Der Fremdlufteinlass 40 ist also an der bezüglich der Haupt-Arbeitsrichtung HA gesehenen Rückseite 20 des Maschinengehäuses 50 angeordnet.

An der Rückseite 20 des Maschinengehäuses 50 und/oder an der Rückseite des Staubabfuhrraums 31 erstreckt sich ein Fremdluftkanal 40A, an dem der Fremdlufteinlass 40 angeordnet ist. Der Fremdlufteinlass 40 und eine Einströmöffnung 40B zum Einströmen von Fremdluft F in eine Aufnahmekammer 32A, in der das Staubluftrad 32 angeordnet ist, sind über den Fremdluftkanal 40A miteinander strömungsverbunden.

Durch den Fremdlufteinlass 40 einströmende Fremdluft F durchströmt den Fremdluftkanal 40A und strömt über die Einströmöffnung 40B in den Staubabfuhrraum 31.

Der Fremdluftkanal 40A erstreckt sich vorteilhaft im Wesentlichen über die gesamte Querbreite oder mindestens 50 % oder 60 % der Querbreite des Staubabfuhrraums 31 und/oder des Maschinengehäuses 15 im Bereich des Staubabfuhrraums 31 quer zur Längsmittelebene 23.

Während der Staubabfuhranschluss 33 parallel oder mit einer Neigung von weniger als 30° Grad, bevorzugt weniger als 20° Grad, noch weiter bevorzugt weniger als 10° Grad / zur Längsmittelebene 23 verläuft, verläuft der Fremdlufteinlass 40 quer zur Längsmittelebene 23, beispielsweise etwa rechtwinkelig quer.

Die Anordnung des Fremdlufteinlasses 40 ist vorteilhaft so getroffen, dass die in den Fremdlufteinlass 40 einströmende Fremdluft F den Staubabfuhrraum 31 nahezu vollständig rotatorisch durchströmt und dabei Staub und Partikel aufnimmt, bevor sie in den Staubabfuhranschluss 33 als Staubluftstrom S einströmt. Jedenfalls kann das Staubluftrad 32 die durch den Fremdlufteinlass 40 einströmende Fremdluft F durch den nahezu vollständigen Staubabfuhrraum 31 hindurchfördern, nämlich im Rahmen einer Drehbewegung oder die Werkzeugachse W umströmende Strömungsbewegung, bevor der Staubabluftstrom S aus dem Staubabfuhrraum 31 durch den Staubabfuhranschluss 33 ausströmt.

Eine Durchströmung des Fremdlufteinlasses 40 mit Fremdluft F ist insbesondere dann gewünscht, wenn der Saugschlauch 70A und somit der Staubsauger STA angeschlossen ist. Dadurch wird eine unerwünschte Unterdrucksituation vermieden, d. h., dass stets ein ausreichender Staubluftstrom S den Staubabfuhranschluss 33 durchströmen kann, ohne dass der Staubsauger STA bzw. eine dort vorhandene Strömungsmesseinrichtung oder Druck-Messeinrichtung einen überhöhten Unterdruck ermittelt, was zu einer Abschaltung des Staubsaugers STA führen würde. Wenn der Staubsauger STA einen zu geringen Staubluftstrom S fördert, droht die Gefahr, dass Staub in die Umgebung der Hand-Werkzeugmaschine 10 oder Schleifmaschine 11 in nicht akzeptablem Maß gelangen könnte. Der Staubsauger STA soll also möglichst stetig den Staubluftstrom S erzeugen können.

Wird hingegen die Staubsammelvorrichtung 70 an den Staubabfuhranschluss 33 angeschlossen, würde die in den Fremdlufteinlass 40 einströmende Fremdluft F die Förderleistung des Staubluftrads 32 verringern, so dass der Staubluftstrom S ein zu geringes Maß haben könnte. Daher ist es vorteilhaft, den Fremdlufteinlass 40 dann, wenn die Staubsammelvorrichtung 70 am Staubabfuhranschluss 33 angeordnet ist, den Fremdlufteinlass 40 ganz oder zumindest teilweise zu verschließen.

Die Staubsammelvorrichtung 70 weist eine Verschlusspartie 42A, die zum Verschließen des Fremdlufteinlasses 40 dient und einen Bestandteil einer Verschlusseinrichtung 41A bildet. Die Verschlusspartie 42A kann prinzipiell dazu vorgesehen und ausgestaltet sein, den Fremdlufteinlass 40 vollständig und/oder luft-dicht zu verschließen. Es ist aber auch möglich, dass die Verschlusspartie 42A den Fremdlufteinlass 40 zwar abdeckt, jedoch nicht vollständig oder luftdicht verschließt. Mithin kann also eine geringe Menge von Fremdluft durch den Fremdlufteinlass 40 einströmen, auch wenn der Fremdlufteinlass 40 durch die Verschlusspartie 42A abgedeckt ist. Beispielsweise kann zwischen einer Außenumfang der Verschlusspartie 42A und einer neben der Verschlusspartie 42A verlaufenden Kontur oder Wand des Fremdlufteinlasses 40 ein schmaler Schlitz vorhanden sein, durch den noch Fremdluft in den Fremdlufteinlass 40 strömen kann, wenn auch nur wenig Fremdluft.

Die Steckführungskontur 80A und/oder die Verdrehsicherungskontur 81 der Staubsammelvorrichtung 70 werden vorteilhaft durch die Verschlusspartie 42A gebildet oder bereitgestellt oder sind an der Verschlusspartie 42A angeordnet. Es ist auch möglich, dass die Verschlusspartie 42A die Steckführungskontur 80A und/oder die Verdrehsicherungskontur 81 bildet.

Wenn die Staubsammelvorrichtung 70 an den Staubabfuhranschluss 33 angeschlossen wird, soll der Fremdlufteinlass 40 verschlossen werden. Die Verschlusspartie 42A gelangt bereits beim Anstecken der Staubsammelvorrichtung 70 an den Staubabfuhranschluss 33 vor den Fremdlufteinlass 40 und verschließt diesen.

Die Verschlusspartie 42A weist beispielsweise eine wandartige Gestalt auf und verschließt den Fremdlufteinlass 40, wenn die Staubsammelvorrichtung 70 am Staubabfuhranschluss 33 befestigt ist. Zugleich bildet die Verschlusspartie 42A die bereits angedeutete Formschlusskontur 56B, die die für einen zumindest in Bezug auf eine Verdrehung bezüglich der Steckachse ST wirkende Verdrehsicherungskontur 81 oder Formschlusskontur darstellt. Mithin bildet also die Steckführungskontur 80B am Fremdlufteinlass 40 eine Gegen-Formschlusskontur 36B für die Formschlusskontur 56B.

Vorteilhaft ist es aber auch, sowohl bei den in der Zeichnung dargestellten Ausführungsformen als auch bei jeder erfindungsgemäßen Schleifmaschine, wenn eine Verschlusseinrichtung zum Verschließen eines Fremdlufteinlasses unabhängig von dem Anschluss eines Staubsammelbehälters nutzbar ist und/oder eine Verschlusseinrichtung eine Einstellung des Strömungsquerschnitts des Fremdlufteinlasses ermöglicht, also beispielsweise eine Art Stellventil bereitstellt oder ein Stellventil umfasst. Mit einer solchen Verschlusseinrichtung kann der Fremdlufteinlass nicht nur vollständig geöffnet oder vollständig geschlossen werden, sondern auch Zwischenstellungen zwischen einer Offenstellung und einer Schließstellung einnehmen.

Eine solche größere Flexibilität in Bezug auf das Verschließen eines Fremdlufteinlasses bietet eine Verschlusseinrichtung 41B, die zum Verschließen eines Fremdlufteinlasses 140 dient. Der Fremdlufteinlass 140 ist wie der Fremdlufteinlass 40 an der Rückseite 20 der Schleifmaschine 11 angeordnet. Allerdings erstreckt sich der Fremdlufteinlass 140 etwa über eine Querbreite der Rückseite 20 hinweg und durchsetzt die Längsmittelebene 23. Der Fremdlufteinlass 140 ist zur Unterseite 25 und/oder in einer Orientierung zur Bearbeitungsfläche 92 des Tellerwerkzeugs 90 hin offen, kann also aus der Umgebung der Hand-Werkzeugmaschine 10 und der Schleifmaschine 11 Staub in den Staubabfuhrraum 31 absaugen. Wenn also beispielsweise bei einer Führung der Schleifmaschine 11 in der Haupt-Arbeitsrichtung HA noch Staub an der Werkstückoberfläche WO zurückbleibt, kann dieser über den Fremdlufteinlass 140 eingesaugt werden. Mithin ist also hier eine Art "Staubsaugerfunktion" gegeben.

Auch der Fremdlufteinlass 140 ist bei Bedarf verschließbar, beispielsweise bei Benutzung der Staubsammelvorrichtung 70. Hierzu ist eine Verschlusseinrichtung 41B vorgesehen, die ein Verschlussglied 42B aufweist, welches zum Verschließen des Fremdlufteinlasses 140 oder zu dessen Öffnung geeignet ist. Das Verschlussglied 42B ist beispielsweise in der Art einer Walze ausgestaltet oder von einem Drehkörper 43 gebildet. Das Verschlussglied 42B ist neben dem Fremdluftkanal 40A angeordnet oder an dem Fremdluftkanal 40A angeordnet. Vorteilhaft erstreckt sich das Verschlussglied 42B etwa über die gesamte Längserstreckung des Fremdluftkanals 40A.

Das Verschlussglied 42B oder der Drehkörper 43 ist an einer Lageraufnahme 44 des Maschinengehäuses 15 drehbar gelagert, wobei es oder er zwischen einer Offenstellung OP, in der der Fremdlufteinlass 140 geöffnet ist, und einer Schließstellung SP, in der der Fremdlufteinlass 140 geschlossen ist, verstellbar ist.

Das Verschlussglied 42B weist beispielsweise eine zylindrische Umfangswand oder Verschlusswand 42C auf, die durch Verdrehen des Verschlussglieds 42B vor die Einströmöffnung 40B, über die die Fremdluft F in die Aufnahmekammer 32A einströmen kann, verstellbar ist, wobei dann die Verschlusswand 42C die Einströmöffnung 40B verschließt, und von der Einströmöffnung 40B weg verstellbar ist, sodass die Einströmöffnung 40B zur Durchströmung mit Fremdluft F frei ist. Zwischenstellungen des Verschlussglieds 42B sind möglich, bei denen die Verschlusswand 42C die Einströmöffnung 40B nur teilweise verschließt.

Wenn das Verschlussglied 42B in der Offenstellung OP ist, kann Fremdluft F das Verschlussglied 42B durch eine Einströmöffnung 42D und eine Ausströmöffnungen 42E durchströmen. In dieser Offenstellung OP liegt die Einströmöffnung 42D dem Fremdluftkanal 40A gegenüber und die Ausströmöffnung 42E der Einströmöffnung 40B gegenüber.

Es sei erwähnt, dass das Verschlussglied 42B auch beispielsweise Zwischenstellungen zwischen seiner Offenstellung OP und seiner Schließstellung SP einnehmen kann, so dass die Menge der den Fremdlufteinlass 140 durchströmenden Fremdluft F einstellbar ist.

Das Verschlussglied 42B kann man auch als ein Ventilglied eines Stellventils bezeichnen oder ansehen.

Zur Betätigung des Drehkörpers 43 oder des Verschlussglieds 42B kann beispielsweise ein in der Art eines Handgriffs ausgestaltetes Betätigungselement 45 vorgesehen sein. Das Betätigungselement 45 weist beispielsweise einen Betätigungsvorsprung 45A, der mit zwei Fingern eines Bedieners geklemmt werden kann, auf.

Alternativ zu dem Betätigungselement 45 kann auch ein zur Betätigung mit einem Werkzeug oder Hilfsmittel vorgesehenes Betätigungselement 46 am Verschlussglied 42B vorgesehen sein. Das Betätigungselement 46 weist einen Schlitz 46A auf, der beispielsweise mit einem Schraubendreher, einer Münze oder dergleichen betätigbar ist, um das Verschlussglied 42B zwischen seiner Schließstellung SP und seiner Offenstellung OP zu verstellen.

Die Betätigungselemente 45 oder 46 sind vorzugsweise an einer von der Drehachse des Verschlussglieds 42B Stirnseite des Verschlussglieds 42B vorgesehen.

Eine weitere Alternative zur Betätigung des Verschlussglieds 42B stellt ein schematisch dargestellter motorischer und/oder elektrischer und/oder elektrisch angetriebener Aktor 47 dar, beispielsweise ein Elektromotor, ein Elektromagnet oder dergleichen. Der Aktor 47 kann beispielsweise anhand eines elektrischen Schalters und/oder eines Sensors 48 betätigbar oder ansteuerbar sein. Der Sensor 48 ist beispielsweise mit einer Steuerung 120 der Hand-Werkzeugmaschine 10 verbunden, die anhand von Signalen des Sensors 48 Steuerbefehle erzeugt, insbesondere für den Aktor 47.

Der Sensor 48 erfasst beispielsweise das Vorhandensein der Staubsammelvorrichtung 70 am Staubabfuhranschluss 33. Wenn also beispielsweise die Staubsammelvorrichtung 70 an den Stauabfuhranschluss 33 angesteckt wird, kann dies der Sensor 48 erfassen und den Aktor 47 zur Verstellung des Verschlussglieds 42B in seine Schließstellung SP ansteuern. Der Sensor 48 ist beispielsweise ein Drucksensor, ein elektrischer Schalter, ein Näherungssensor oder dergleichen. Selbstverständlich kann auch auf ein RFID-Sensor, ein Magnet, ein Hallsensor, ein optischer Sensor oder dergleichen vorgesehen sein.

Des Weiteren ist denkbar, dass von dem Verschlussglied 42B ein schematisch dargestelltes Betätigungselement 49, zum Beispiel ein Betätigungsvorsprung absteht, das beim Anstecken der Staubsammelvorrichtung 70 an den Staubabfuhranschluss 33 betätigbar ist, um das Verschlussglied 42B in Richtung seiner Schließstellung SP zu betätigen. Beispielsweise möglich als Betätigungselement 49 ist eine Art Mitnahmegabel, in die ein Mitnahmevorsprung an der Staubsammelvorrichtung 70 eingreift. Somit ist es auch möglich, dass die Staubsammelvorrichtung 70 beim Entfernen vom Staubabfuhranschluss 33 die Verschlusseinrichtung 41B bzw. das Verschlussglied 42B in Richtung der Offenstellung OP wieder mitnimmt.

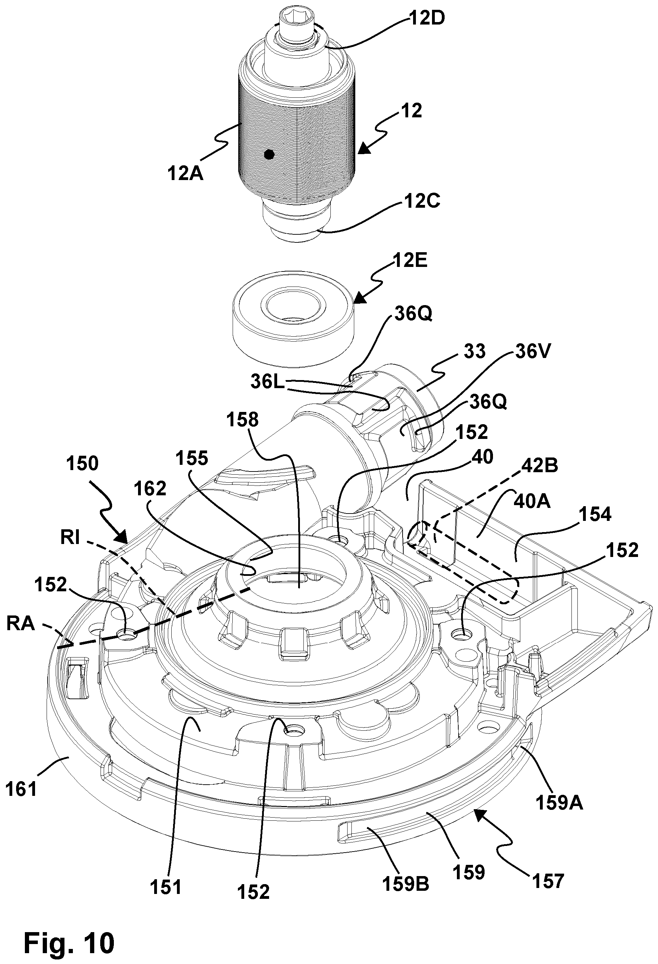

Das Verschlussglied 42B, insbesondere in seiner Eigenschaft als Ventilglied, kann auch ohne weiteres beide Ausführungsform gemäß Figur 10 zum Einsatz kommen, wo es schematisch in den Fremdluftkanal 40A eingezeichnet ist. Somit könnte das Verschlussglied 42B dazu vorgesehen und ausgestaltet sein, beispielsweise den Fremdluftstrom innerhalb des Fremdluftkanals 40A variabel einzustellen. Zusätzlich ist der Fremdluftkanal 40A, insbesondere der Fremdlufteinlass 40, durch die Verschlusspartie 42A der Staubsammelvorrichtung 70 gegebenenfalls vollständig oder im Wesentlichen vollständig verschließbar. Somit kann also beispielsweise bei einem Betrieb der Hand-Werkzeugmaschine 10 ohne die Staubsammelvorrichtung 70 anhand des Verschlussglieds 42B der Fremdluftstrom variabel einstellbar sein, während er mit der Staubsammelvorrichtung 70 ganz oder teilweise unterbunden wird.

An dieser Stelle sei erwähnt, dass eine beispielsweise kleinere Verschlussfläche des Verschlusspartie 42A dazu geeignet ist, den Fremdlufteinlass 40 nur teilweise zu verschließen, wenn die Staubsammelvorrichtung 70 an der Hand-Werkzeugmaschine 10 angeordnet ist. Weiterhin ist es möglich, dass die Verschlusspartie 42A beweglich an der Staubsammelvorrichtung 70 gelagert ist, beispielsweise anhand eines schematisch dargestellten Lagers 40L, insbesondere Schiebelagers und/oder Drehlagers. Beispielsweise ist die Verschlusspartie 42A in eine in gestrichelten Linien nach oben dargestellte Position verstellbar, in der sie den Fremdlufteinlass 40 nur teilweise verschließt, wenn die Staubsammelvorrichtung 70 an der Hand-Werkzeugmaschine 10 angeordnet ist. Vorteilhaft ist die Verschlusspartie 42A auch in Zwischenpositionen zwischen der gestrichelt dargestellten Position und der in durchgezogenen Linien dargestellten Position und/oder auch in eine den Fremdlufteinlass 40 noch weiter freigebende Position verstellbar.

Ein Abstellen der Schleifmaschine 11 oder Hand-Werkzeugmaschine 10 auf ihrer Oberseite 24 gelingt sehr einfach, wobei es keine Rolle spielt, ob die Staubsammelvorrichtung 70 am Staubabfuhranschluss 33 befestigt ist oder nicht. In beiden Situationen kann die Schleifmaschine 11 mit ihrer Oberseite 24 beispielsweise auf der Werkstückoberfläche WO abgelegt und abgestützt werden, ohne dass sie dann zur Seite kippen würde, beispielsweise zu einer der Längsseiten 21 oder 22.

Hierfür ist eine Stützkontur-Anordnung 28 vorgesehen. Die Stützkontur-Anordnung 28 umfasst den Griffabschnitt 17 sowie einen am freien Endbereich des Energiespeicheranschlusses 26 oder des Handgriffs 18 angeordnete Stützkontur, beispielsweise einen Vorsprung 29. Der Vorsprung 29 ist mit einem Querabstand zur Längsmittelebene 23 vorgesehen. Wenn also die Schleifmaschine 11 oder Hand-Werkzeugmaschine 10 mit der Staubsammelvorrichtung 70, wenn diese am Staubabfuhranschluss 33 befestigt ist, auf ihrer Oberseite 24 auf dem Untergrund, beispielsweise der Werkstückoberfläche WO, abgelegt wird, stützt sie sich mit dem Griffabschnitt 17, der Stützkontur oder dem Vorsprung 29 sowie einer an einer Kante zwischen der Rückwand 75D und der Seitenwand 75A des Staubsammelbehälters 75 vorgesehenen Stützkontur 29A auf dem Untergrund oder der Werkstückoberfläche WO ab.

Wird die Staubsammelvorrichtung 70 jedoch vom Staubabfuhranschluss 33 entfernt, ist ebenso ein verkippsicheres Abstellen oder Ablegen des Maschinengehäuses 15 mit seiner Oberseite 24 auf dem Untergrund oder der Werkstückoberfläche WO möglich. Dann stützt sich die Hand-Werkzeugmaschine 10 und/oder das Maschinengehäuse 15 beispielsweise mit der Stützkontur 29, dem Griffabschnitt 17 sowie einer Stützkontur 29B am freien Endbereich des Handgriffs 18 auf dem Untergrund oder der Werkstückoberfläche WO ab.

Die Stützkontur-Paarungen 29, 29B oder 29, 29A sind an einander entgegengesetzten Seiten der Längsmittelebene 23 angeordnet und weisen zudem einen Längsabstand bezüglich des Griffabschnitts 17 auf, so dass stets eine stabile Dreipunktauflage der Hand-Werkzeugmaschine 10 oder Schleifmaschine 11 mit und ohne am Maschinengehäuse 15 angeordneter Staubsammelvorrichtung 70 auf dem Untergrund oder Werkstückoberfläche WO möglich ist.

Zum Verschließen der Motoraufnahme 16A oder des die Motoraufnahme 16A bereitstellenden Motoraufnahmeraums 16C ist ein Lagerträger 150 vorgesehen. Der Lagerträger 150 bildet einen Deckel 150A.

Der Lagerträger 150 ist beispielsweise als ein Wandkörper 157 ausgestaltet oder weist einen Wandkörper 157 auf.

Der Lagerträger 150 oder Wandkörper 157 weist beispielsweise einen Wandabschnitt oder eine Wand 151 auf, der die Motoraufnahme 16A oder den Motoraufnahmeraum 16C verschließt.

Der Rotor 12B des Antriebsmotors 12 ist an der Motorwelle 12C angeordnet. Die Motorwelle 12C ist an einem Motorlager 12D und einem Motorlager 12E drehbar bezüglich des Maschinengehäuses 15 gelagert.

Das Motorlager 12D und das Motorlager 12E sind an einander entgegengesetzten Seiten des Rotors 12B oder der Motorwelle 12C angeordnet.

Im Bereich der Oberseite 24 des Maschinengehäuses 15 und/oder an einer zu der Werkzeugaufnahme 14 entgegengesetzten Seite des Maschinengehäuses 15 ist eine Lageraufnahme 16B für das Motorlager 12D angeordnet. Die Lageraufnahme 16B ist beispielsweise an der Motoraufnahme 16A angeordnet.

Das Motorlager 12E ist an einer Lageraufnahme 155 des Lagerträgers 150 gehalten. Der Lagerträger 150 und/oder der Wandkörper 157 bildet eine Stützstruktur 160, die die Lageraufnahme 155 trägt. Die Stützstruktur 160 erstreckt sich mit einer Richtungskomponente parallel zur Motorachse M in Richtung der Werkzeugaufnahme 14.

Die Lageraufnahme 155 ist etwa zentral an dem Lagerträger 150 oder der Wand 151 angeordnet. In der Lageraufnahme 155 ist ein ringförmiges Lager-Halteelement 156 angeordnet, beispielsweise aus Stahl oder dergleichen, welches das Motorlager 12E aufnimmt. Ohne weiteres wäre es möglich, dass Motorlager 12E direkt an der Lageraufnahme 155 abzustützen, d.h. dass das Lager-Halteelement 156 nicht vorhanden ist.

Um die Lageraufnahme 155 herum weist der Lagerträger 150 Schrauböffnungen 152 auf, durch die Schrauben 153 hindurch steckbar sind, die in das Maschinengehäuse 17 einschraubbar sind. Durch diese Schrauben 153 sowie Formschlusskonturen am Lagerträger 150, die in dazu passende Formschlusskonturen des Maschinengehäuses 15 formschlüssig eingreifen, ist der Lagerträger 150 ortsfest bezüglich des Maschinengehäuses 15 gehalten. Somit ist auch das Motorlager 12E bezüglich des Maschinengehäuses 15 ortsfest gehalten.

Die Schrauböffnungen 152 sind relativ nah bezüglich der Motorachse M angeordnet. Beispielsweise sind die Schrauböffnungen 152 von einem Außenumfang 161 des Lagerträgers 150 mit einem äußeren Radialabstand RA beabstandet und von einem Innenumfang 162 der Lageraufnahme 155 mit einem inneren Radialabstand RI beabstandet. Man erkennt, dass die Radialabstände RA und RI nur wenig voneinander abweichen, beispielsweise maximal 20 % oder 30 % oder allenfalls 40 %.

Der Lagerträger 150 weist an einer der Rückseite 20 des Maschinengehäuses 15 zugewandten Seite einen Kanalabschnitt 154 auf, in dem der Fremdluftkanal 40A ausgebildet ist.

Weiterhin ist an einer von dem Motoraufnahmeraum 16C abgewandten Seite des Lagerträgers 150 die Aufnahmekammer 32A für das Staubluftrad 32 vorgesehen.

Die Wand 151 ist beispielsweise gewölbt oder domartig, sodass er einen Lagerträger-Aufnahmeraum 158 ausbildet, der die Aufnahmekammer 32A bildet und/oder zur Aufnahme des Staubluftrads 32 geeignet ist.

Der Lagerträger-Aufnahmeraum 158 oder die Aufnahmekammer 32A für das Staubluftrad 32 ist mit dem Staubabfuhranschluss 33 strömungsverbunden. Beispielsweise ist die Aufnahmekammer 32A mit dem Abfuhr-Anschlussrohr 34 strömungsverbunden.

Der Lagerträger 150 ist beispielsweise aus Metall oder einem anderweitig festen oder steifen Material. Somit kann der Lagerträger 150 beispielsweise Aufnahmen 159 zum Tragen eines Schutzkörpers 38 aufweisen. Die Aufnahmen 159 sind beispielsweise am Außenumfang der Wand 151 angeordnet.

In die Aufnahmen 159 können beispielsweise Rastvorsprünge 38A des Schutzkörpers 38 eingreifen. Beispielsweise umfassen die Aufnahmen 159 Rastaufnahmen 159A für die Rastvorsprünge 38A und/oder, insbesondere ringförmig um die Motorachse M verlaufende, Nuten 159B, in die ringförmige, in die Haltevorsprünge oder Haltekonturen 38B des Schutzkörpers 38 eingreifen können und im am Lagerträger 150 montierten Zustand des Schutzkörpers 38 eingreifen.

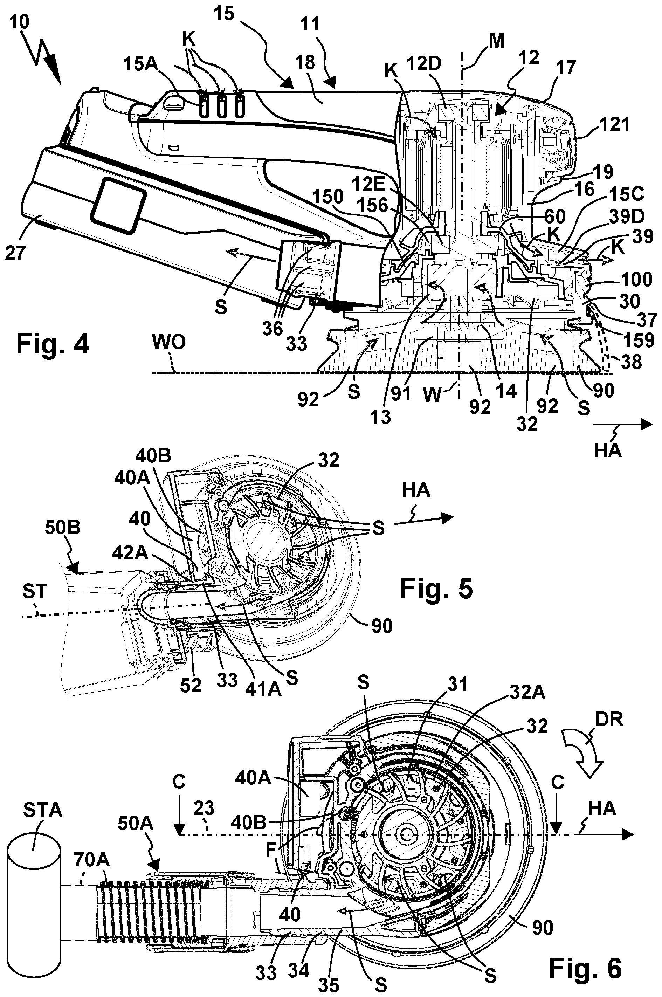

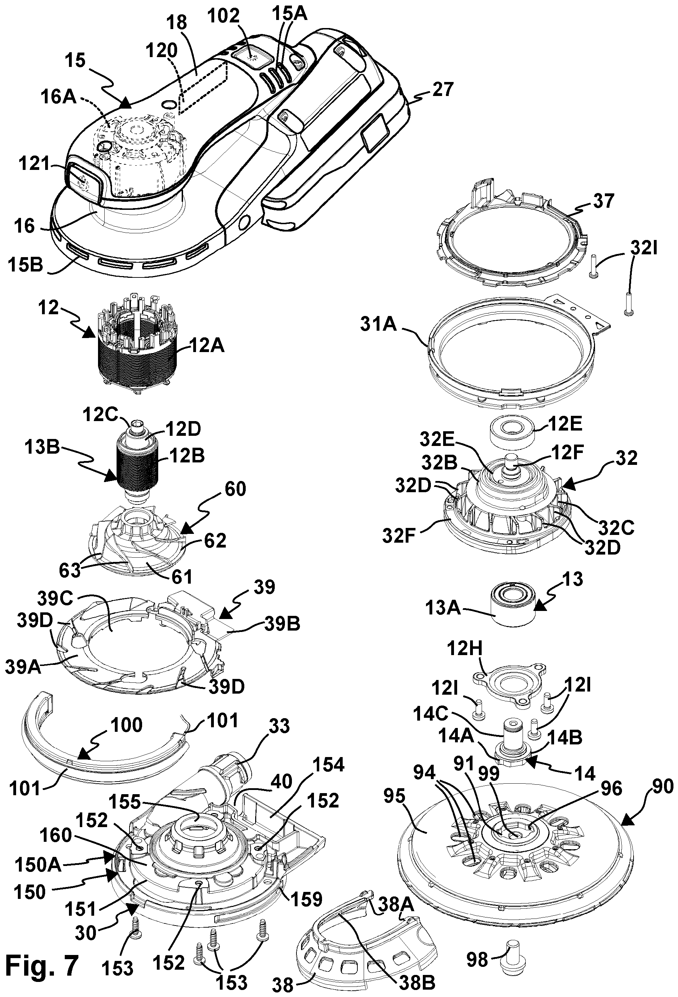

Der in Figur 4 schematisch angedeutete und in Figur 7 etwas verkleinert dargestellte Schutzkörper 38 dient zum Schützen eines radialen Außenumfangs des Tellerwerkzeugs 90, beispielsweise eines Kissens des Tellerwerkzeugs 90. Der Schutzkörper 38 schützt das Tellerwerkzeug 90 insbesondere beim Arbeiten in Inneneckbereichen, wenn Schmalseiten oder Umfangsseiten des Tellerwerkzeugs 90 gegen ein Hindernis stoßen würden. Dann schlägt der Schutzkörper 38 an diesem Hindernis an, sodass das bezogen auf das Hindernis hinter dem Schutzkörper 38 angeordnete Tellerwerkzeug 90 keine Beschädigung erfährt Der Schutzkörper 38 ist beispielsweise in der Art einer ringförmigen oder teilringförmigen Umfangswand, einer Schürze oder dergleichen ausgestaltet.

Die Motorlager 12D und 12E sind vorzugsweise Wälzlager, insbesondere Rollenlager oder Kugellager.

Nahe bei dem Motorlager 12E weist die Motorwelle 12C ein Aufnahmeelement 12F auf, welches drehfest mit der Motorwelle 12C verbunden ist oder einstückig mit der Motorwelle 12C sein kann. Das Motorlager 12E ist beispielsweise so ausgestaltet, dass es die Motorwelle 12C und/oder das Aufnahmeelement 12F abstützt und/oder drehbar bezüglich der Motorachse M lagert.

Das Aufnahmeelement 12F weist eine Aufnahme 12G auf, in der das Getriebe 13, beispielsweise in Gestalt des Exzenterlagers 13A, aufgenommen ist. Das Exzenterlager 13A oder Getriebe 13 ist anhand eines Haltekörpers 12H gehalten, der beispielsweise anhand von Schrauben 121 mit dem Aufnahmeelement 12F verschraubt ist.

Das Exzenterlager 13C ist z.B. ein Wälzlager, insbesondere ein Kugellager oder Rollenlager. Das Exzenterlager 13C ist exzentrisch bezüglich der Motorachse M, wobei die Werkzeugachse W einen Exzenterabstand e zur Motorachse M aufweist.

Die Werkzeugaufnahme 14, zum Beispiel ein Bolzenabschnitt 14C der Werkzeugaufnahme 14, ist beispielsweise an einer Aufnahme 13B des Exzenterlager 13A oder Getriebes 13 aufgenommen, insbesondere in einem Presssitz und/oder anhand einer Verklebung und/oder dergleichen.

Die Werkzeugaufnahme 14 ist zur Dreh-Mitnahme des Tellerwerkzeugs 90 bezüglich der Werkzeugachse W ausgestaltet. Die Werkzeugaufnahme 14 umfasst beispielsweise einen Drehmitnahmeabschnitt 14A, an dessen Außenumfang eine Drehmitnahmekontur 14B angeordnet ist. Die Drehmitnahmekontur 14B passt formschlüssig in eine Drehmitnahmekontur 96 an der Antriebsaufnahme 91 des Tellerwerkzeugs 90, sodass die Drehmitnahmekonturen 14B und 96 insgesamt das Tellerwerkzeug 90 drehfest in Bezug auf die Werkzeugachse W mit dem Haltekörper 12H verbinden können.

Weiterhin weist die Werkzeugaufnahme 14 eine Schraubaufnahme 14D auf, in die eine Befestigungsschraube 98, die durch eine Durchtrittsöffnung 99 des Tellerwerkzeugs 90 durchgesteckt werden kann, einschraubbar ist, sodass das Tellerwerkzeug 90 zugfest in Bezug auf die Werkzeugachse W mit der Werkzeugaufnahme 14 verbindbar oder verbunden ist.

Zwischen dem Staubluftrad 32 und dem Antriebsmotor 12 ist ein Kühlluftrad 60 angeordnet.

Das Kühlluftrad 60 ist zwischen dem Antriebsmotor 12 und dem Lagerträger 150 angeordnet.

Der Lagerträger 150 trennt den Staubabfuhrraum 31 dem Motoraufnahmeraum 16C. Der Lagerträger 150 kann auch als eine Schottwand bezeichnet werden oder eine Schottwand aufweisen, die den Staubabfuhrraum 31 von dem Motoraufnahmeraum 16C abtrennt oder den Staubabfuhrraum 31 von dem weiteren Innenraum des Maschinengehäuses 15 abtrennt.

Das Kühlluftrad 60 ist drehfest mit der Motorwelle 12C verbunden. Das Kühlluftrad 60 dient zur Erzeugung eines Kühlluftstroms K, der über Einströmöffnungen 15A in das Maschinengehäuse 15 einströmt, den Motoraufnahmeraum 16C durchströmt, den Antriebsmotor 12 umströmt und/oder durchströmt und anschließend über Ausströmöffnungen 15B aus dem Maschinengehäuse 15 ausströmt.

Die Einströmöffnungen 15A sind vorteilhaft abseits und entfernt von der Werkzeugaufnahme 14 und somit vom Tellerwerkzeug 90 angeordnet, beispielsweise am Längsendbereich des Handgriffs 18.

Die Ausströmöffnungen 15B sind vorteilhaft an der Vorderseite 19 des Maschinengehäuses 15 oberhalb des Staubabfuhrraums 31 und/oder in einer Ausströmrichtung etwa entsprechend der Haupt-Arbeitsrichtung HA angeordnet, sodass in Haupt-Arbeitsrichtung HA auf der Werkstückoberfläche WO aufliegender Staub durch den Kühlluftstrom K weggeblasen werden kann.

Vorteilhaft sind auch Ausströmöffnungen 15B quer zur Haupt-Arbeitsrichtung HA vorgesehen. Diese Maßnahme verringert vorteilhaft den Strömungswiderstand für den Kühlluftstrom K und/oder ermöglicht ein besseres Freiblasen der Arbeitsumgebung um die Hand-Werkzeugmaschine 10.

Das Kühlluftrad 60 weist einen Lüfterabschnitt 61 auf. Der Lüfterabschnitt 61 umfasst eine Tragwand 62, von der Lüfterschaufeln 63 abstehen und/oder an der Lüfterschaufeln 63 angeordnet sind.

Die Lüfterschaufeln 63 können auch beispielsweise an bezüglich der Motorachse M zueinander beabstandeten ringförmigen, vorzugsweise unterschiedliche Durchmesser aufweisenden, Trägern 262 gehalten sein, die anstelle der Tragwand 62 oder in Ergänzung zu der Tragwand 62 vorgesehen sein können. Die Träger 262 sind schematisch dargestellt.

Die Tragwand 62 steht von einem Halteabschnitt 64 des Kühlluftrads 60 ab oder ist an dem Halteabschnitt 64 angeordnet.

Der Halteabschnitt 64 weist eine beispielsweise als Durchtrittsöffnung ausgestaltete Wellenaufnahme 65 zur Aufnahme der Motorwelle 12C auf. Der Halteabschnitt 64 ist beispielsweise als ein zylindrischer Abschnitt oder ein Haltezylinder ausgestaltet.

Von dem Halteabschnitt 64 stehen vorteilhaft Rippen 66 ab, die beispielsweise als Stützrippen dienen und/oder zur Erzeugung oder Lenkung des Kühlluftstroms K beitragen. Die Rippen 66 sind vorteilhaft parallel zur Motorachse M orientiert. Flachseiten der Rippen 66 erstrecken sich vorteilhaft parallel zur Motorachse M.

Das Kühlluftrad 60 bildet einen Axial-Radiallüfter oder Diagonal-Lüfter. Die Lüfterschaufeln 63 sind bezüglich der Motorachse M schräg geneigt.

Die Lüfterschaufeln 63 weisen Axialabschnitte 63A und Radialabschnitte 63B auf.

Die Axialabschnitte 63A können dazu dienen, dass der Kühlluftstrom K den Antriebsmotor 12 durchströmt und umströmt. Die Axialabschnitte 63A sorgen für eine axiale Strömungsrichtung des Kühlluftstroms K etwa parallel zu der Motorachse M oder entlang der Motorachse M auf einer Ansaugseite des Kühlluftrads 60. Der Kühlluftstrom K wird durch die Axialabschnitte 63A sozusagen angesaugt.

Die Axialabschnitte 63A der Lüfterschaufeln 63 gehen in der Art einer Verschränkung in die Radialabschnitte 63B über.

Die Radialabschnitte 63B sorgen vorteilhaft für ein bezüglich der Motorachse M radiales Ausblasen oder Wegfördern des Kühlluftstroms K, sodass der Kühlluftstrom K über die Ausströmöffnungen 15B aus dem Motoraufnahmeraum 16C ausströmt.

Die Axialabschnitte 63A nehmen ein Volumen des Kühlluftstroms K in Richtung der Radialabschnitte 63B mit.

In Bezug auf die Drehrichtung DR sind die Axialabschnitte 63A relativ flach geneigt. In Bezug auf die Drehrichtung DR haben die Axialabschnitte 63A vorzugsweise eine Neigung von beispielsweise 30° bis 50°, insbesondere eine Neigung von etwa 45°. Diese Neigung haben die Axialabschnitte 63A vorzugsweise auch in Bezug auf die Motorachse M, die gleichzeitig die Drehachse des Kühlluftrads 60 ist.

In Bezug auf die Drehrichtung DR sind die Axialabschnitte 63A etwas flacher als die Radialabschnitte 63B geneigt.

Die Lüfterschaufeln 63 weisen in Drehrichtung DR vordere Schaufelkanten oder Schaufelvorderkanten 63C oder Eintrittskanten und in Drehrichtung DR hintere Schaufelkanten oder Schaufelhinterkanten 63D oder Austrittskanten auf.

Die Schaufelvorderkante 63C ist vorteilhaft in Drehrichtung DR vor der Schaufelhinterkante 63D angeordnet.

Die Eintrittskante 63C verläuft beispielsweise im Wesentlichen radial zur Motorachse M. Die Austrittskante 63D hingegen verläuft im Wesentlichen parallel zur Motorachse M.

Die Lüfterschaufeln 63, insbesondere die Radialabschnitte 63B, können aber auch zu einer Beschleunigung des Kühlluftstroms K vorgesehen sein, insbesondere derart, dass beispielsweise ein hoher Differenzdruck, insbesondere in einem sich an die Radialabschnitte anschließenden, das Kühlluftrad 60 umgebenden Diffusor der Hand-Werkzeugmaschine 10, erzeugbar ist. Beispielsweise ist vorgesehen, dass ein Eintritt-Strömungsquerschnitt 63E, der sich zwischen in Drehrichtung DR hintereinander angeordneten und/oder benachbarten Lüfterschaufeln 63 zwischen deren Eintrittskanten 63C erstreckt, größer als ein Austritt-Strömungsquerschnitt 63F ist, der unter anderem durch die Austrittskanten 63D dieser Lüfterschaufeln 63 begrenzt ist.

Aus der nachfolgenden Beschreibung werden Maßnahmen erkennbar, aufgrund derer die Schleifmaschine 11 in Bezug auf ihre Erstreckung parallel zur Werkzeugachse W oder Motorachse M besonders kompakt ist, obwohl sie ein Staubluftrad 32 in ihrem Antriebsstrang 13B aufweist.

Des Weiteren ist das Kühlluftrad 60 und der Lagerträger 150 vorzugsweise so ausgestaltet, dass sie bis in einen taillierten Abschnitt 16D des Maschinengehäuses 15 eingreifen können. In dem taillierten Abschnitt 16D ist beispielsweise der Antriebsmotor 12 aufgenommen. Der taillierte Abschnitt 16D erstreckt sich zwischen dem Griffabschnitt 17 und der Abdeckung 30 und kann beispielsweise von einem Bediener umgriffen werden. Insbesondere können Finger eines Bedieners in den taillierten Abschnitt 16D eingreifen, wenn die Hand des Bedieners auf dem Griffabschnitt 17 aufliegt. Weiterhin ist die Durchgreiföffnung 18A neben dem taillierten Abschnitt 16D angeordnet. Somit trägt die Taillierung des Abschnitts 16D vorteilhaft zu einer Vergrößerung der Durchgreiföffnung 18A bei.

Die domartige oder etwa kegelstumpfförmige Wand 151, an deren Oberseite sich das Kühlluftrad 60 sozusagen anschmiegt, trägt zu einer besonders kompakten Bauform und/oder niedrigen Bauweise in Bezug auf die Motorachse M oder Werkzeugachse W bei.

Vorteilhaft ist vorgesehen, dass die einander zugewandten Seiten von Kühlluftrad 60 und Wand 151 zueinander passend ausgestaltet sind und/oder zueinander passende geometrische Verläufe und/oder Konturen aufweisen.

Ebenso angepasst an die Wand 151, nämlich an deren Unterseite, ist das Staubluftrad 32, welches an seiner der Wand 151 zugewandten Oberseite zumindest an einem der Wand 151 gegenüberliegenden Abschnitt ebenfalls eine domartige oder etwa kegelstumpfartige Kontur aufweist.

Das Kühlluftrad 60, insbesondere die Tragwand 62, hat eine insgesamt etwa glockenförmige und/oder domartige und/oder etwa kegelstumpfförmige Gestalt. An einer von den Lüfterschaufeln 63 abgewandten Seite der Tragwand 62 begrenzt die Tragwand 62 einen Kühlluftrad-Aufnahmeraum 67.

Der Kühlluftrad-Aufnahmeraum 67 ermöglicht die Anordnung mehrerer Komponenten.

Beispielsweise ist der Lagerträger 150 zumindest teilweise in dem Kühlluftrad-Aufnahmeraum 67 angeordnet. Insbesondere erstreckt sich der Wandabschnitt oder die Wand 151 in den Kühlluftrad-Aufnahmeraum 67 hinein. Mithin ist also eine den Staubabfuhrraum 31 vom Motoraufnahmeraum 16C trennende Schottwand in Gestalt des Lagerträgers 150 in dem Kühlluftrad-Aufnahmeraum 67 oder einem Innenraum des Kühlluftrads 60 angeordnet.

Der Wandabschnitt oder die Wand 151 hat zumindest im Bereich des Kühlluftrad-Aufnahmeraums 67 eine etwa glockenförmige Gestalt entsprechend der Form der Tragwand 62 im Bereich der Wand 151. Beispielsweise liegen Flachseiten des Wandabschnitts oder der Wand 151 und der Tragwand 62 einander flächig gegenüber.

Weiterhin ist in dem Kühlluftrad-Aufnahmeraum 67 das Motorlager 12E angeordnet. Das Motorlager 12E ist vollständig in dem Kühlluftrad-Aufnahmeraum 67 aufgenommen. Das Motorlager 12E ist an einem in dem Kühlluftrad-Aufnahmeraum 67 angeordneten Abschnitt des Lagerträgers 150 gehalten, nämlich an der Lageraufnahme 155.

Des Weiteren ist das Getriebe 13 und/oder das Exzenterlager 13A in dem Kühlluftrad-Aufnahmeraum 67 zumindest teilweise aufgenommen.

Auch der Haltekörper 12H, der das Getriebe 13 oder Exzenterlager 13A hält, ist zumindest teilweise in dem Kühlluftrad-Aufnahmeraum 67 aufgenommen.

Der Haltekörper 12H und/oder das Getriebe 13 und/oder das Exzenterlager 13A stehen an einer von dem Antriebsmotor 12 abgewandten Seite zumindest teilweise vor den Kühlluftrad-Aufnahmeraum 67 vor. Dennoch erstreckt sich parallel zur Motorachse M ein großer Teil, beispielsweise etwa die Hälfte, des Haltekörpers 12H und/oder des Getriebes 13 und/oder des Exzenterlager 13A in den Kühlluftrad-Aufnahmeraum 67 hinein.

Schließlich ist auch ein Teil des Staubluftrads 32 in dem Kühlluftrad-Aufnahmeraum 67 angeordnet. Beispielsweise erstreckt sich ein Halteabschnitt 32B des Staubluftrads 32 in den Kühlluftrad-Aufnahmeraum 67 hinein. Ein an den Halteabschnitt 32B angrenzender Lüfterabschnitt 32C, an dem Lüfterschaufeln 32D angeordnet sind, steht vor den Kühlluftrad-Aufnahmeraum 67 vor. Die Lüfterschaufeln 32D dienen zur Erzeugung eines Luftstroms bezüglich der Motorachse M oder der Werkzeugachse W, der einen Bestandteil des Staubluftstroms S bildet.

Das Staubluftrad 32 ist drehfest bezüglich der Motorachse M an dem Aufnahmeelement 12F gehalten.

Das Staubluftrad 32 weist eine Aufnahme 32E für das Aufnahmeelement 12F der Motorwelle 12C auf. Das Aufnahmeelement 12F durchsetzt die Aufnahme 32E oder ist in der Aufnahme 32E gehalten, insbesondere drehfest gehalten.

Die Aufnahme 32E bildet einen Staubluftrad-Aufnahmeraum 32G, beispielsweise zur Aufnahme des Getriebes 13.

Das Staubluftrad 32 weist eine Wuchtpartie 32F auf, die beispielsweise zur Kompensation von durch die exzentrische Lagerung der Werkzeugaufnahme 14 bewirkten Unwuchten dient.

Das Staubluftrad 32 greift weiterhin in einen Innenraum oder eine Durchtrittsöffnung eines Luftleitkörpers 37 ein. Der Luftleitkörper 37 ist beispielsweise als eine Scheibe oder als ein scheibenförmiger Körper ausgestaltet.

Der Luftleitkörper 37 ist sandwichartig zwischen der Dichtung 31A und dem Lagerträger 150 gehalten. Die Dichtung 31A dient also zum Halten des Luftleitkörpers 37 am Lagerträger 150.

Die Dichtung 31A ist beispielsweise mit Schrauben 32L an dem Lagerträger 150 gehalten.

An einer von dem Staubabfuhrraum 31 abgewandten Seite ist an dem Lagerträger 150 ein Abdeckkörper 39 angeordnet. Der Abdeckkörper 39 weist einen ringförmigen Plattenabschnitt 39A auf, der eine Durchtrittsöffnung 39C umgibt, in die der Wandabschnitt oder die Wand 151 eingreift.

Von dem Plattenabschnitt 39A steht ein Wandabschnitt 39B ab, der den Kanalabschnitt 154 überdeckt und verschließt.

Weiterhin ist auch das Kühlluftrad 60 in der Durchtrittsöffnung 39C angeordnet oder greift in die Durchtrittsöffnung 39C ein. Der Abdeckkörper 39, insbesondere der Plattenabschnitt 39A, dient auch dazu, den Kühlluftstrom K zu lenken. Beispielsweise kann der Kühlluftstrom K an einer von dem Staubluftrad 60 abgewandten Seite des Plattenabschnitts 39A entlang strömen und wird von dieser Seite nach radial außen bezüglich der Motorachse M in Richtung der Ausströmöffnungen 15B gelenkt.

An dem Plattenabschnitt 39A sind Aufnahmen 39D angeordnet, beispielsweise an der Seite, an der der Kühlluftstrom K entlang strömt. In die Aufnahme 39D können Stützrippen oder Stützabschnitte 15C des Maschinengehäuses 15 formschlüssig eingreifen, sodass der Abdeckkörper 39 formschlüssig am Maschinengehäuse 15 gehalten ist, beispielsweise im Sinne einer Verdrehsicherung bezüglich der Motorachse M und/oder als eine Versteifung des Maschinengehäuses 15.

Vorteilhaft weist die Hand-Werkzeugmaschine 10 eine Beleuchtungseinrichtung 100 auf. Die Beleuchtungseinrichtung 100 umfasst beispielsweise einen ringförmigen Träger 101, an dem in der Zeichnung nicht sichtbare Leuchtelemente, insbesondere LEDs, angeordnet sind.

Die Montage der Beleuchtungseinrichtung 100 gestaltet sich insofern einfach, als die Beleuchtungseinrichtung 100 zwischen den Abdeckkörper 39 und den Luftleitkörper 37 geklemmt ist. Der Abdeckkörper 39 und/oder der Luftleitkörper 37 sind vorzugsweise federnd nachgiebig, so dass Schwingungen, die beispielsweise vom Antriebsstrang 13B ausgehen, eine geringere oder keine Auswirkung auf die Beleuchtungseinrichtung 100 haben.

Die Beleuchtungseinrichtung 100 ist anhand der sie haltenden Komponenten, beispielsweise des Abdeckkörpers 39 und/oder des Luftleitkörpers 37 und/oder des Lagerträgers 150, radial bezüglich der Motorachse M fixiert.

Vorteilhaft ist die Beleuchtungseinrichtung 100 in einer Nut aufgenommen, die von der sie haltenden Komponenten, beispielsweise dem Abdeckkörper 39 und/oder dem Luftleitkörper 37 und/oder dem Lagerträger 150, bereitgestellt wird.

Ferner gelingt die Montage auch deshalb sehr einfach, weil der Lagerträger 150, wenn er mit den Schrauben 153 am Maschinengehäuse 15 befestigt wird, die zwischen dem Lagerträger 150 und dem Maschinengehäuse 15 angeordneten Komponenten, unter anderem den Abdeckkörper 39 und den Luftleitkörper 37 sowie die gegebenenfalls zwischen diesen beiden vorgenannten Körpern 39 und 37 geklemmte Beleuchtungseinrichtung 100 bezüglich des Maschinengehäuses 15 fixiert.

Anhand eines Anschlusskabels 102 ist die Beleuchtungseinrichtung 100 mit einer in der Zeichnung schematisch dargestellten Steuerung 120 der Hand-Werkzeugmaschine 10 verbindbar. Zum Einschalten und Ausschalten der Beleuchtungseinrichtung 100 dient ein Schalter 103. Der Schalter 103 kann direkt an das Anschlusskabel 102 angeschlossen sein oder mit der Steuerung 120 verbunden sein.

Vorteilhaft ist die Steuerung 120 in dem Handgriff 18 angeordnet. Die Steuerung 120 ist zweckmäßigerweise zwischen den Einströmöffnungen 15A und dem Antriebsmotor 12 angeordnet, sodass der über die Einströmöffnungen 15A einströmende Kühlluftstrom K die Steuerung 120 kühlen kann.

Zum Einschalten und Ausschalten des Antriebsmotors 12 dient ein weiterer Schalter 121. Der Schalter 121 ist vorteilhaft an der Vorderseite 19 des Maschinengehäuses 15, insbesondere direkt unterhalb oder neben dem Griffabschnitt 12 angeordnet, sodass ein Bediener den Schalter 121 leicht ergreifen und betätigen kann.

## Patentansprüche

1. Staubabfuhrvorrichtung (50), insbesondere Staubsammelvorrichtung (70), für eine Hand-Werkzeugmaschine, insbesondere eine Schleifmaschine (11) oder eine Säge, wobei die Staubabfuhrvorrichtung (50) einen rohrförmigen Anschlusskörper (51A, 51B) zum Anschließen an einen rohrförmigen Staubabfuhranschluss (33) der Hand-Werkzeugmaschine (10) aufweist, wobei über den Staubabfuhranschluss (33) ein Staubluftstrom zur Wegförderung von beim Betrieb der Schleifmaschine (11) anfallendem Staub aus einem Staubabfuhrraum (31) zu der Staubabfuhrvorrichtung (50) strömen kann, wobei der Anschlusskörper (51A, 51B) eine Klemmeinrichtung (52) zum Verklemmen mit dem Staubabfuhranschluss (33) aufweist, wobei die Klemmeinrichtung (52) ein Betätigungselement (57X) zur Betätigung der Klemmeinrichtung (52) zwischen einer Freigabestellung (FS) und einer Klemmstellung aufweist, wobei ein Aufnahmequerschnitt (55) des Anschlusskörpers (51A, 51B) für den Staubabfuhranschluss (33) in der Klemmstellung zum Verklemmen des Staubabfuhranschlusses (33) mit dem Anschlusskörper (51A, 51B) kleiner als in der Freigabestellung (FS) ist, die zum Entfernen der Staubabfuhrvorrichtung (50) von dem Staubabfuhranschluss (33) vorgesehen ist, **dadurch gekennzeichnet, dass** das Betätigungselement (57X) einen Schwenkhebel (57) umfasst, der zwischen einer der Klemmstellung zugeordneten Klemm-Betätigungsstellung (KB) und einer der Freigabestellung (FS) zugeordneten Freigabe-Betätigungsstellung (FB) um eine Schwenkachse (SA) um einen Schwenkwinkel schwenkbar gelagert ist.

2. Staubabfuhrvorrichtung (50) nach Anspruch 1, **dadurch gekennzeichnet, dass** der Schwenkwinkel kleiner als 250°, noch weiter bevorzugt kleiner als 180°, noch weiter bevorzugt kleiner als 150°, weiter bevorzugt kleiner als 120°, noch weiter bevorzugt kleiner als 100°, insbesondere etwa 90°, ist.

3. Staubabfuhrvorrichtung (50) nach Anspruch 1 oder 2, **dadurch gekennzeichnet, dass** sie eine Federeinrichtung (57J), insbesondere einen elastischen Körper, aufweist, die die Klemmeinrichtung (52) in Richtung der Freigabestellung (FS) belastet.

4. Staubabfuhrvorrichtung (50) nach einem der vorhergehenden Ansprüche, **dadurch gekennzeichnet, dass** die Klemmeinrichtung (52) eine Klemmschelle (53) umfasst oder in der Art einer Klemmschelle (53) ausgebildet ist oder in der Klemmstellung aufeinander zu verstellte und in der Freigabestellung (FS) voneinander weg verstellte Klemmschenkel (54) umfasst, wobei vorteilhaft vorgesehen ist, dass die Federeinrichtung (57J) zwischen den Klemmschenkeln (54) angeordnet ist und die Klemmschenkel (54) voneinander weg belastet.

5. Staubabfuhrvorrichtung (50) nach einem der vorhergehenden Ansprüche, **dadurch gekennzeichnet, dass** der Schwenkhebel (57) mit mindestens einem Zuganker (58) bewegungsgekoppelt oder verbunden ist, wobei der Schwenkhebel (57) den Zuganker (58) in der Klemm-Betätigungsstellung (KB) im Sinne eines Verengens des Aufnahmequerschnitts (55) betätigt und/oder der Zuganker (58) Klemmschenkel (54) der Klemmeinrichtung (52) in der Klemm-Betätigungsstellung (KB) aufeinander zu betätigt, und/oder dass der Schwenkhebel (57) eine Betätigungskontur (57E) zum Betätigen der Klemmeinrichtung (52) zwischen der Freigabestellung (FS) und der Klemmstellung aufweist, wobei vorteilhaft vorgesehen ist, dass die Betätigungskontur (57E) exzentrisch zu der Schwenkachse (SA) verläuft oder eine Exzenter-Kontur (57F) umfasst.

6. Staubabfuhrvorrichtung (50) nach einem der vorhergehenden Ansprüche, **dadurch gekennzeichnet, dass** der Schwenkhebel (57) eine dem Anschlusskörper (51A, 51B) zugewandte Aufnahmekontur (57G) für den Anschlusskörper (51A, 51B) aufweist, in die der Anschlusskörper (51A, 51B) in der Klemm-Betätigungsstellung (KB) eingreift, und/oder dass der Schwenkhebel (57) einen Griffvorsprung (57G) umfasst, der in der Klemm-Betätigungsstellung (KB) von dem Anschlusskörper (51A, 51B) zum Ergreifen durch einen Bediener und Betätigen aus der Klemm-Betätigungsstellung (KB) in die Freigabe-Bestätigungsstellung absteht.

7. Staubabfuhrvorrichtung (50) nach einem der vorhergehenden Ansprüche, **dadurch gekennzeichnet, dass** sie einen an dem Anschlusskörper (51A, 51B) angeordneten und mit dem Anschlusskörper (51A, 51B) strömungsverbunden Saugschlauch (70A) zur Verbindung mit einem Staubsauger (STA) umfasst.

8. Staubabfuhrvorrichtung (50) nach einem der vorhergehenden Ansprüche, **dadurch gekennzeichnet, dass** sie einen Staubsammelbehälter (75) zum Sammeln von Staub umfasst, wobei ein Aufnahmeraum des Staubsammelbehälters (75) mit dem Anschlusskörper (51A, 51B) strömungsverbunden ist, wobei vorteilhaft vorgesehen ist, dass der Staubsammelbehälter (75) einen flexiblen Staubbehälter sowie einen Stützkörper (77) zum Stützen des Staubbehälters in einer den Staubbehälter aufspannenden oder offen haltenden und zur Aufnahme von Staub geeigneten Aufnahmestellung aufweist.

9. Staubabfuhrvorrichtung (50) nach Anspruch 8, **dadurch gekennzeichnet, dass** der Stützkörper einen sich von dem Anschlusskörper (51A, 51B) weg erstreckenden Stützkörper-Längsabschnitt (77A) und einen zu dem Stützkörper-Längsabschnitt (77A) quer verlaufenden Stützkörper-Querabschnitt (77B) aufweist, wobei Stützkörper so an dem Anschlusskörper (51A, 51B) angeordnet ist, dass der Stützkörper-Längsabschnitt (77A) im an der Hand-Werkzeugmaschine (10) montierten Zustand der Staubabfuhrvorrichtung (50) an einer von einem Handgriff (18) und/oder Energiespeicher der Hand-Werkzeugmaschine (10) abgewandten Seite verläuft und der Stützkörper-Querabschnitt (77B) zu dem Handgriff (18) und/oder Energiespeicher (27) zugewandt ist.

10. Staubabfuhrvorrichtung (50) nach einem der vorhergehenden Ansprüche, **dadurch gekennzeichnet, dass** der Anschlusskörper (51A, 51B) entlang einer Steckachse (ST) an den Staubabfuhranschluss (33) ansteckbar ist.

11. Staubabfuhrvorrichtung (50) nach einem der vorhergehenden Ansprüche, **dadurch gekennzeichnet, dass** an dem Anschlusskörper (51A, 51B) mindestens eine Formschlusskontur (56B) zum Eingriff in eine Gegen-Formschlusskontur (36B) des Staubabfuhranschlusses (33) oder eine an dem Staubabfuhranschluss (33) angeordnete Gegen-Formschlusskontur (36B) angeordnet ist, wobei vorteilhaft vorgesehen ist, die mindestens eine Formschlusskontur (56A, 56B) eine einem Verdrehen der Staubabfuhrvorrichtung (50) an dem Staubabfuhranschluss (33) entgegenwirkende oder ein Verdrehen der Staubabfuhrvorrichtung (50) bezüglich des Staubabfuhranschlusses (33) verhindernde Verdrehsicherungskontur (81) bildet und/oder dass die mindestens eine Formschlusskontur (56A, 56B) dazu vorgesehen und ausgestaltet ist, dass sie beim Eingriff in die Gegen-Formschlusskontur (36, 36B) der Hand-Werkzeugmaschine (10) die Staubabfuhrvorrichtung (50) formschlüssig zugfest bezüglich der Steckachse (ST) an dem Staubabfuhranschluss (33) hält und/oder dass die mindestens eine Formschlusskontur (56A, 56B) mindestens einen Formschlussvorsprung umfasst, der in den Aufnahmequerschnitt (55) des Anschlusskörpers (51A, 51B) und/oder eine Innenumfangswandfläche (51B) des Anschlusskörpers (51A, 51B) vorsteht, und/oder die mindestens eine Formschlusskontur (56A, 56B) mindestens einen Formschlussvorsprung umfasst, der außerhalb des Aufnahmequerschnitts (55) des Anschlusskörpers (51A, 51B), insbesondere radial bezüglich einer zum Anstecken des Anschlusskörpers (51A, 51B) an den Staubabfuhranschluss (33) vorgesehenen Steckachse (ST), nach außen vor den Anschlusskörper (51A, 51B) vorsteht.

12. Staubabfuhrvorrichtung (50) nach Anspruch 11, **dadurch gekennzeichnet, dass** die mindestens eine Formschlusskontur (56A, 56B) mindestens eine Quer-Formschlusskontur (56Q) aufweist, die quer zu einer Achse, insbesondere einer Steckachse (ST) zum Anstecken des Anschlusskörpers (51A, 51B) an den Staubabfuhranschluss (33), verläuft und zu einem zugfesten Halten des Anschlusskörpers (51A, 51B) an dem Staubabfuhranschluss (33) bezüglich der Achse ausgestaltet und vorgesehen ist, und/oder mindestens eine Längs-Formschlusskontur (50 L) aufweist, die parallel oder mit einer Richtungskomponente parallel zu einer Achse, insbesondere einer Steckachse (ST) zum Anstecken des Anschlusskörpers (51A, 51B) an den Staubabfuhranschluss (33), verläuft und als Verdrehsicherung zu einem verdrehsicheren Halten des Anschlusskörpers (51A, 51B) an dem Staubabfuhranschluss (33) bezüglich der Achse ausgestaltet und vorgesehen ist.

13. Staubabfuhrvorrichtung (50) nach einem der vorhergehenden Ansprüche, **dadurch gekennzeichnet, dass** sie eine, insbesondere durch eine Formschlusskontur (56A, 56B) oder die mindestens eine Formschlusskontur (56A, 56B) gebildete Verschlusspartie (42A) für einen Fremdlufteinlass (40) der Hand-Werkzeugmaschine (10) zum Einlassen von Fremdluft (F) in den Staubabfuhrraum (31) umfasst, wobei der Fremdlufteinlass (40) neben dem Staubabfuhranschluss (33) oder stromauf des Staubabfuhranschlusses (33) angeordnet ist.

14. Staubabfuhrvorrichtung (50) nach einem der vorhergehenden Ansprüche, **dadurch gekennzeichnet, dass** die Staubabfuhrvorrichtung (50) eine insbesondere die mindestens eine Formschlusskontur (56A, 56B) umfassende oder durch die mindestens eine Formschlusskontur (56A, 56B) gebildete Steckführungskontur (80) zum bezüglich der Steckachse (ST) verdrehsicheren Führen des Anschlusskörpers (51A, 51B) an dem Staubabfuhranschluss (33) aufweist.

15. Hand-Werkzeugmaschine (10) mit einem Staubabfuhranschluss (33) sowie eine Staubabfuhrvorrichtung (50) nach einem der vorhergehenden Ansprüche, die an den Staubabfuhranschluss (33) anschließbar ist, insbesondere dass sie eine an dem Staubabfuhranschluss (33) angeordnete Gegen-Formschlusskontur (36B) für eine oder die Formschlusskontur (56A, 56B) der Staubabfuhrvorrichtung (50) aufweist.
